# EUROPEAN PATENT APPLICATION

(11) **EP 4 746 392 A1**
(43) Date of publication of application: **20.05.2026**
(21) Application number: 24921515.3
(22) Date of filing: 12.10.2024
(51) Int. Cl.: H04M 1/02, G06F 1/16

(54) **FOLDABLE DEVICE AND FLEXIBLE PRINTED CIRCUIT**

(30) Priority: 04.02.2024 CN 202410163446
(71) Applicant: Huawei Technologies Co., Ltd., Shenzhen, Guangdong 518129 (CN)
(72) Inventor: YOU, Yulin, Shenzhen, Guangdong 518129 (CN); GU, Mingpeng, Shenzhen, Guangdong 518129 (CN); WANG, Jiaming, Shenzhen, Guangdong 518129 (CN); WANG, Jikang, Shenzhen, Guangdong 518129 (CN); TIAN, Yang, Shenzhen, Guangdong 518129 (CN); JIANG, Wenjie, Shenzhen, Guangdong 518129 (CN); CUI, Xianchao, Shenzhen, Guangdong 518129 (CN); LUO, Yufeng, Shenzhen, Guangdong 518129 (CN)
(74) Representative: Grünecker Patent- und Rechtsanwälte PartG mbB
(86) International application number: PCT/CN2024/124536
(87) International publication number: WO 2025/161491

(57) **Abstract**

Embodiments of this application provide a foldable device and a flexible circuit board, relating to the field of electronic devices. An objective of this application is to reduce a space within a rotating shaft available for accommodating interconnection cables, so as to save shaft passing resources. A specific solution includes: A foldable device includes a radio frequency integrated circuit, a system on chip, a first power management chip, a second power management chip, a first body, and a second body. The radio frequency integrated circuit and the first power management chip are disposed on the first body, the system on chip and the second power management chip are disposed on the second body, and the second power management chip does not supply power to the radio frequency integrated circuit and the first power management chip. A power-consuming component on the second body is powered by a second battery, and a power-consuming component on the first body is powered by a first battery. This reduces a quantity of shaft passing power cables to save shaft passing resources. A cellular antenna is disposed on the first body, and a short-range antenna is disposed on the second body. A radio frequency power amplifier and the system on chip are respectively disposed on different bodies to avoid heat concentration.

## Description

This application claims priority to Chinese Patent Application No. 202410163446.X, filed with the China National Intellectual Property Administration on February 4, 2024 and entitled "FOLDABLE DEVICE AND FLEXIBLE CIRCUIT BOARD", which is incorporated herein by reference in its entirety.

### TECHNICAL FIELD

Embodiments of this application relate to the field of electronic devices, and in particular, to a foldable device and a flexible circuit board.

### BACKGROUND

Foldable devices (for example, foldable mobile phones) gradually become a development trend of mobile electronic products in the future. In an unfolded state, they can offer a larger display area that enhances viewing effect; in a folded state, their compact size makes them easier to carry. The foldable device mainly includes a first body, a rotating shaft, and a second body that are sequentially arranged. Components on the first body and components on the second body are interconnected through interconnection cables. A quantity of interconnection cables affects a space within the rotating shaft available for accommodating these lines.

### SUMMARY

Embodiments of this application provide a foldable device and a flexible circuit board, to reduce a space within a rotating shaft available for accommodating interconnection cables.

To achieve the foregoing objective, the following technical solutions are used in this application.

According to a first aspect, an embodiment of this application provides a foldable device. The foldable device includes a first body, a rotating shaft, and a second body. When the foldable device is in a flattened state, the first body, the rotating shaft, and the second body are sequentially arranged. The foldable device further includes a radio frequency integrated circuit, a system on chip, a flexible circuit board, a first battery, a second battery, a first power management chip, and a second power management chip. The radio frequency integrated circuit is configured to generate a radio frequency signal after performing radio frequency processing on data sent by the system on chip, and the radio frequency integrated circuit is disposed on the first body. The system on chip is configured to perform data receiving and data sending with the radio frequency integrated circuit. The system on chip is disposed on the second body. The radio frequency integrated circuit and the system on chip are electrically connected to each other via the flexible circuit board. The first battery is disposed on the first body, and the second battery is disposed on the second body. The first power management chip is electrically connected to the first battery, and is configured to supply power to the radio frequency integrated circuit. The second power management chip is electrically connected to the second battery, and is configured to: supply power to the system on chip and skip supplying power to the first power management chip. Therefore, the system on chip and the radio frequency integrated circuit are respectively disposed on different bodies of the foldable device. This avoids congestion of a component on a body caused when the system on chip and the radio frequency integrated circuit are disposed on the same body, and helps make allocation of a component on the two bodies more reasonable. More space can be reserved for other components (such as batteries). In addition, because power of the system on chip and the radio frequency integrated circuit is high, the system on chip and the radio frequency integrated circuit are respectively disposed on the two bodies, to avoid large local heat generated when the foldable device operates, and improve heat dissipation performance of the foldable device. In addition, because the second power management chip disposed on the second body does not supply power to the first power management chip disposed on the first body, a power cable that supplies power to the first power management chip may be disposed only on the first body. In other words, the power cable that supplies power to the first power management chip does not need to extend from the second body through the rotating shaft to the first body. A power cable that needs to extend from the second body to the first body is reduced. For example, only a power cable for charging the first battery may be disposed, so that power cable accommodating space of the rotating shaft is reduced, and a size of the power cable accommodating space of the rotating shaft is reduced.

With reference to the first aspect, in some implementations, the second power management chip does not supply power to the radio frequency integrated circuit. In this way, a power cable that supplies power to the radio frequency integrated circuit does not need to extend to the rotating shaft and the second body. This reduces the power cable accommodating space of the rotating shaft.

With reference to the first aspect, in some implementations, the first battery is configured to output a power supply voltage, and the first battery is configured to provide the power supply voltage for the first power management chip. The foldable device further includes a voltage regulator circuit. The voltage regulator circuit is disposed on the first body, is electrically connected to the first battery, and is configured to: reduce the power supply voltage and provide a reduced voltage for the first power management chip and the radio frequency integrated circuit. Because the first battery, the voltage regulator circuit, the first power management chip, and the radio frequency integrated circuit are all disposed on the first body, a power cable electrically connecting the first battery to the voltage regulator circuit, a power cable electrically connecting the voltage regulator circuit to the first power management chip, and a power cable electrically connecting the voltage regulator circuit to the radio frequency integrated circuit are all located on the first body. The foregoing power cables do not need to extend to the rotating shaft and the second body, and do not need to be electrically connected to a component on the rotating shaft and the second body. This reduces a quantity and length of power cables on the second body. This also reduces the power cable accommodating space of the rotating shaft. This facilitates miniaturization of the foldable device.

With reference to the first aspect, in some implementations, the voltage regulator circuit includes a first voltage step-down component, a second voltage step-down component, and a first voltage regulation component. The first voltage step-down component is disposed on the first body, is electrically connected to the first battery, and is configured to: reduce the power supply voltage to a first voltage and provide the first voltage for the first power management chip. The second voltage step-down component is disposed on the first body, is electrically connected to the first battery, and is configured to: reduce the power supply voltage to a second voltage and provide the second voltage for the first power management chip. The first voltage regulation component is disposed on the first body, is electrically connected to the first voltage step-down component, and is configured to: reduce the first voltage to a third voltage and provide the third voltage for the first power management chip and the radio frequency integrated circuit. Therefore, the foregoing power cables that provide the first voltage, the second voltage, and the third voltage are all disposed on the first body, and the power cables do not need to extend to the rotating shaft and the second body, so that a layout of the power cables is more compact, thereby facilitating miniaturization of the foldable device.

With reference to the first aspect, in some implementations, the foldable device further includes a radio frequency switch. The radio frequency switch is disposed on the first body. The voltage regulator circuit further includes a third voltage step-down component and a second voltage regulation component. The third voltage step-down component is disposed on the first body, is electrically connected to the first battery, and is configured to: reduce the power supply voltage to a fourth voltage and provide the fourth voltage for the second voltage regulation component. The second voltage regulation component is disposed on the first body, is electrically connected to the third voltage step-down component, and is configured to: reduce the fourth voltage to a fifth voltage and provide the fifth voltage for the radio frequency switch. Therefore, both the radio frequency switch and the power cables that provide the fourth voltage and the fifth voltage are disposed on the first body. The foregoing power cables do not need to extend to the rotating shaft, and the rotating shaft does not need space for accommodating the power cable. This avoids reduced support strength of the rotating shaft and increased process difficulty of the rotating shaft caused by the accommodating space.

With reference to the first aspect, in some implementations, the foldable device further includes a radio frequency power amplifier disposed on the first body. Both the third voltage step-down component and the first battery are electrically connected to the radio frequency power amplifier, and the third voltage step-down component is further configured to provide the fourth voltage for the radio frequency power amplifier; and the first battery is further configured to provide the power supply voltage for the radio frequency power amplifier. Therefore, a power cable that supplies power to the radio frequency power amplifier may be disposed only on the first body, and does not need to extend to the rotating shaft and the second body. The rotating shaft does not need space for accommodating the power cable. This avoids reduced support strength of the rotating shaft and increased process difficulty of the rotating shaft caused by the accommodating space. In addition, power of the radio frequency power amplifier and the system on chip is high. When the foldable device operates, both the radio frequency power amplifier and the system on chip release much heat. The radio frequency power amplifier and the system on chip are respectively disposed on the first body and the second body, to avoid concentration of heat released by the radio frequency power amplifier and the system on chip. This improves heat dissipation performance of the foldable device.

With reference to the first aspect, in some implementations, the foldable device further includes a charging manager. The charging manager is disposed on the second body. Both the first battery and the second battery are electrically connected to the charging manager. The charging manager is configured to: obtain a voltage of the first battery and a voltage of the second battery; and output a control instruction based on a difference between the voltage of the first battery and the voltage of the second battery. The control instruction is used to: when the difference is greater than or equal to a threshold and the voltage of the first battery is higher than the voltage of the second battery, control the first battery to charge the second battery; or the control instruction is used to: when the difference is greater than or equal to a threshold and the voltage of the first battery is lower than the voltage of the second battery, control the second battery to charge the first battery. In this way, the charging manager can control the difference between the voltage of the first battery and the voltage of the second battery to be small, and to be less than the threshold. This avoids a problem that a battery level of one of the first battery and the second battery is low and a battery level of the other battery is high.

With reference to the first aspect, in some implementations, the foldable device further includes a hardware module, a first aggregation chip, a first signal cable, and a second signal cable. The hardware module is disposed on the first body. The first aggregation chip is disposed on the first body. The hardware module is electrically connected to the first aggregation chip through the first signal cable. The system on chip is electrically connected to the first aggregation chip through the second signal cable. A quantity of first signal cables is greater than a quantity of second signal cables. Because both the transmission hardware module and the first aggregation chip are disposed on the first body, the first signal cable is also located on the first body. The system on chip is disposed on the second body, and the second signal cable extends from the first body to the second body. Because the quantity of first signal cables is greater than the quantity of second signal cables, in a case in which signal exchange between the hardware module and the system on chip is met, reducing the quantity of signal cables can reduce signal cable accommodating space of the rotating shaft, so that the rotating shaft has high support strength.

With reference to the first aspect, in some implementations, the foldable device further includes a second aggregation chip and a third signal cable. The second aggregation chip is disposed on the second body, the second aggregation chip is electrically connected to the first aggregation chip through the second signal cable, and the second aggregation chip is electrically connected to the system on chip through the third signal cable. A quantity of third signal cables is equal to the quantity of first signal cables. In this way, a quantity of signal cables on the second body can be reduced.

With reference to the first aspect, in some implementations, the flexible circuit board has a first region and a bending region. When the foldable device is in the flattened state, a vertical projection of the rotating shaft on the flexible circuit board overlaps the bending region. The flexible circuit board includes a shield layer, a first layer structure, a second layer structure, and a third layer structure that are sequentially stacked in a thickness direction of the flexible circuit board. In the bending region, a first gap exists between the first layer structure and the second layer structure, and a second gap exists between the second layer structure and the third layer structure. The flexible circuit board further includes: a fourth signal cable, configured to connect the radio frequency integrated circuit to the system on chip. The fourth signal cable includes a first conductive section and a second conductive section that are electrically connected to each other, the first conductive section is located in the first region and is formed in the second layer structure, the second conductive section is located in the bending region and is formed in the first layer structure, and a vertical projection of the shield layer on the first layer structure overlaps the second conductive section. Therefore, in a process of folding the foldable device, the first layer structure, the second layer structure, and the third layer structure that are located in the first region have small or almost no relative motion. Because the first conductive section is located in the first region, a distance between the first conductive section and a first conductive layer in a first direction is almost unchanged. Similarly, a distance between the first conductive section and a third conductive layer in the first direction is almost unchanged. The first conductive section almost does not cause a signal loss due to motion relative to the first conductive layer and the third conductive layer, and a signal loss in the first conductive section is small. In the process of folding the foldable device, a distance between the first conductive layer and a second conductive layer located in the bending region and a distance between the third conductive layer and the second conductive layer change continuously. If the second conductive section is also formed on the second conductive layer, a change of the foregoing distance causes a large signal loss on the second conductive section. In this embodiment of this application, the second conductive section is formed on the first conductive layer, so that a signal loss on the second conductive section caused by the change of the foregoing distance can be effectively reduced. In addition, the shield layer is attached to a first coverage layer, and a distance between the shield layer and the second conductive section almost remains unchanged. A vertical projection of the shield layer on the first conductive layer overlaps the second conductive section. The shield layer has a function of avoiding interference to a signal of the second conductive section, and has low impact on a signal loss on the second conductive section.

In some implementations, the first layer structure includes the first coverage layer, the first conductive layer, and a first protection layer that are stacked in the thickness direction of the flexible circuit board. The second layer structure includes a second coverage layer, the second conductive layer, and a second protection layer that are sequentially stacked in the thickness direction of the flexible circuit board, where the second coverage layer is located between the first protection layer and the second conductive layer. The third layer structure includes a third coverage layer, the third conductive layer, and a third protection layer that are sequentially stacked in the thickness direction of the flexible circuit board, where the third coverage layer is located between the second protection layer and the third conductive layer. The first conductive section is formed on the second conductive layer, and the second conductive section is formed on the first conductive layer.

With reference to the first aspect, in some implementations, the fourth signal cable further includes a conductive via. The conductive via penetrates the first layer structure and the second layer structure in the thickness direction of the flexible circuit board, and the first conductive section and the second conductive section are electrically connected to each other through the conductive via.

With reference to the first aspect, in some implementations, the flexible circuit board further includes a first adhesive layer and a second adhesive layer. The first adhesive layer and the second adhesive layer are located in the first region, the first adhesive layer is located between the first layer structure and the second layer structure, and the second adhesive layer is located between the second layer structure and the third layer structure. The first layer structure and the second layer structure are connected to each other through the first adhesive layer, so that relative motion between the first layer structure and the second layer structure that are located in the first region can be avoided. The second layer structure and the third layer structure are connected to each other through the second adhesive layer, so that relative motion between the second layer structure and the third layer structure that are located in the first region can be avoided.

With reference to the first aspect, in some implementations, the vertical projection of the shield layer on the first layer structure covers the second conductive section. In this way, the shield layer has good shielding performance on the second conductive section, so that impact of another cable on a signal of the second conductive section can be reduced, and impact of the second conductive section on another cable can also be reduced.

With reference to the first aspect, in some implementations, the flexible circuit board further has a second region. The first region, the bending region, and the second region are sequentially connected to each other. The fourth signal cable further includes a third conductive section. The third conductive section is located in the second region and is electrically connected to the second conductive section, and the third conductive section is formed in the second layer structure. In a process of folding the foldable device, in the first direction, a distance between the third conductive section and the first conductive layer does not change or changes slightly, and a distance between the third conductive section and the third layer structure does not change or changes slightly. A signal loss in the third conductive section formed in the second region is small.

With reference to the first aspect, in some implementations, the flexible circuit board further includes a clock signal cable. The clock signal cable is formed in the second layer structure, the clock signal cable and the fourth signal cable are electrically isolated from each other, and a vertical projection of the fourth signal cable on the second layer structure does not overlap the clock signal cable. Therefore, the fourth signal cable and the clock signal cable do not overlap in the thickness direction of the flexible circuit board, so that interference between the fourth signal cable and the clock signal cable can be effectively reduced, isolation of the clock signal cable is increased, and a clock signal transmitted through the clock signal cable is more accurate.

With reference to the first aspect, in some implementations, a distance between the clock signal cable and the fourth signal cable is greater than or equal to 0.4 mm. In this way, the distance between the fourth signal cable and the clock signal cable is long, and interference between the fourth signal cable and the clock signal cable is small. This helps improve isolation of the clock signal cable.

With reference to the first aspect, in some implementations, the foldable device further includes a cellular antenna and a short-range antenna. The cellular antenna is disposed on the first body and is electrically connected to the radio frequency integrated circuit. The short-range antenna is disposed on the second body and is electrically connected to the system on chip.

According to a second aspect, an embodiment of this application provides a flexible circuit board. The flexible circuit board has a first region and a bending region. The flexible circuit board includes a first layer structure, a second layer structure, a third layer structure, a signal cable, and a shield layer. The second layer structure and the first layer structure are stacked. In the bending region, a first gap exists between the first layer structure and the second layer structure. The second layer structure is located between the third layer structure and the first layer structure. In the bending region, a second gap exists between the second layer structure and the third layer structure. The signal cable includes a first conductive section and a second conductive section that are electrically connected to each other, the first conductive section is located in the first region and is formed in the second layer structure, and the second conductive section is located in the bending region and is formed in the first layer structure. The first layer structure is located between the second layer structure and the shield layer, and a vertical projection of the shield layer on the first layer structure overlaps the second conductive section.

### BRIEF DESCRIPTION OF DRAWINGS

FIG. 1a is a diagram of a structure of a foldable device in a flattened state;
FIG. 1b is a diagram of a structure of a foldable device in a folded state;
FIG. 2 is a diagram of a breakdown structure of a foldable device;
FIG. 3 is a diagram of a structure of antenna distribution of a foldable device according to an embodiment of this application;
FIG. 4a is a diagram of a structure of a battery circuit of a foldable device according to an embodiment of this application;
FIG. 4b is a control diagram of a charging manager according to an embodiment of this application;
FIG. 5a is a brief diagram of a cabling structure of a hardware module on a foldable device according to an embodiment of this application;
FIG. 5b is a brief diagram of another cabling structure of a hardware module on a foldable device according to an embodiment of this application;
FIG. 6 is a diagram of a structure of a flexible circuit board according to an embodiment of this application;
FIG. 7a is a diagram of a partial structure of a flexible circuit board according to an embodiment of this application;
FIG. 7b is a diagram of a breakdown structure of a flexible circuit board according to an embodiment of this application;
FIG. 8a is a sectional view of a flexible circuit board according to an embodiment of this application;
FIG. 8b is an exploded view of a first conductive layer, a second conductive layer, and a third conductive layer according to an embodiment of this application;
FIG. 8c is another sectional view of a flexible circuit board according to an embodiment of this application; and
FIG. 9 is a diagram of a structure of an electrical connector according to an embodiment of this application.

In the figure: 001: foldable device; 10: first body; 20: second body; 30: rotating shaft; 110: first middle frame; 120: first rear cover; 111: first bezel; 112: first middle plate; 140: first printed circuit board; 210: second middle frame; 211: second bezel; 212: second middle plate; 220: second rear cover; 240: second printed circuit board; 50: flexible circuit board; 40: flexible display; 31: first door plate; 32: second door plate; 33: shaft body; 101: radio frequency integrated circuit; 102: first power management chip; 103: first battery; 104: cellular antenna; 104a: first cellular antenna; 104b: second cellular antenna; 104c: third cellular antenna; 104d: fourth cellular antenna; 104e: fifth cellular antenna; 105: radio frequency switch; 106: radio frequency power amplifier; 107a: hardware module; 107b: hardware module; 108: first aggregation chip; 109: second aggregation chip; 60: voltage regulator circuit; 601: first voltage step-down component; 602: second voltage step-down component; 603: first voltage regulation component; 604: third voltage step-down component; 605: second voltage regulation component; V0: power supply voltage; V1: first voltage; V2: second voltage; V3: third voltage; V4: fourth voltage; V5: fifth voltage; 201: system on chip; 202: second power management chip; 203: second battery; 204: short-range antenna; 204a: first short-range antenna; 204b: second short-range antenna; 205: charging manager; 501: first region; 502: bending region; 503: second region; 504: conductive via; 51: first gap; 52: second gap; 510: first layer structure; 511: first coverage layer; 512: first conductive layer; 513: first protection layer; 520: second layer structure; 521: second coverage layer; 522: second conductive layer; 523: second protection layer; 530: third layer structure; 531: third coverage layer; 532: third conductive layer; 533: third protection layer; 540: shield layer; 550: fourth signal cable; 551: first conductive section; 552: second conductive section; 553: third conductive section; 554: clock signal cable; 555: isolating conductive structure; 561: first adhesive layer; 562: second adhesive layer; 70a: first electrical connector; 70b: second electrical connector; 71: male connector; 72: female connector; 73: first shielding can; 74: second shielding can; 01: first signal cable; 02: second signal cable; 03: third signal cable; 555: isolating conductive structure; and 556: fifth signal cable.

### DESCRIPTION OF EMBODIMENTS

To make the objectives, technical solutions, and advantages of this application clearer, the following further describes this application in detail with reference to the accompanying drawings.

The terms "first" and "second" mentioned below are merely intended for a purpose of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

In addition, in this application, position terms such as "upper", and "lower" are defined relative to an illustrative position of a component in the accompanying drawings. It should be understood that these direction terms are relative concepts and are used for relative description and clarification, and may vary accordingly depending on a position change in which components are placed in the accompanying drawings.

This application provides a foldable device. The foldable device may be, for example, a mobile phone (mobile phone), a tablet computer (pad), a personal digital assistant (personal digital assistant, PDA), or a television. For ease of description, the following uses an example in which the foldable device is a mobile phone for description.

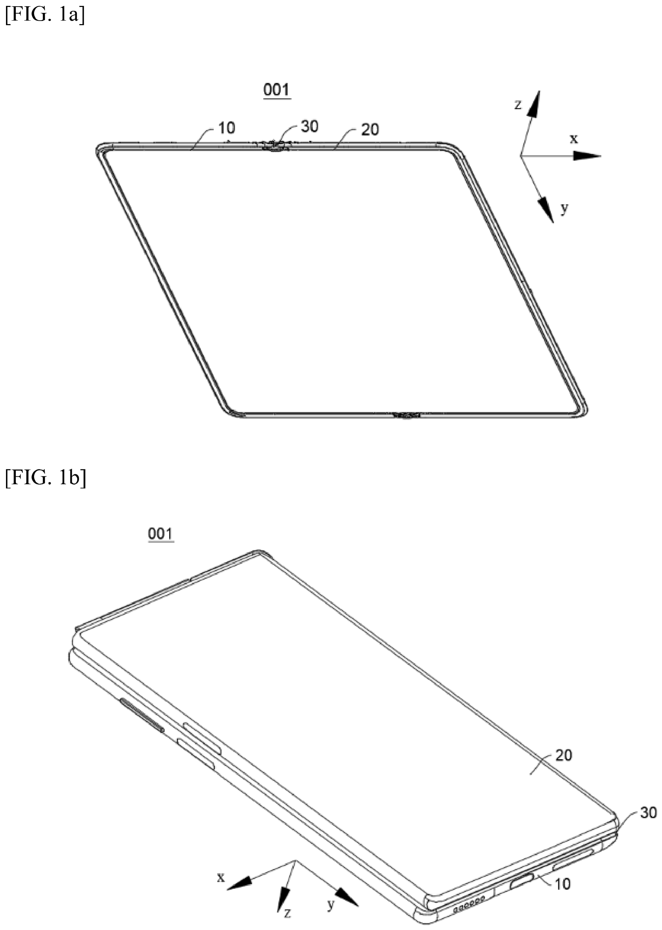

FIG. 1a is a diagram of a structure of a foldable device 001 in a flattened state. FIG. 1b is a diagram of a structure of the foldable device 001 in a folded state. Refer to FIG. 1a and FIG. 1b. The foldable device 001 can be folded or unfolded, so that a size of the foldable device 001 is changed based on actual requirements and use scenarios. For example, when a screen needs to be viewed, the foldable device 001 may be unfolded to a state shown in FIG. 1a, and a flexible display of the foldable device 001 is unfolded, so that the screen can be better viewed. When a call needs to be answered or made, the foldable device 001 may be folded to a state shown in FIG. 1b, to facilitate holding by a user and improve user experience.

It may be understood that the folded state of the foldable device 001 is not limited to the state shown in FIG. 1b. The foldable device 001 may have a plurality of folded states. For example, the foldable device 001 may further have a plurality of folded states between the flattened state in FIG. 1a and the folded state in FIG. 1b.

As shown in FIG. 1a, the foldable device 001 includes a first body 10, a second body 20, and a rotating shaft 30. Both the first body 10 and the second body 20 are connected to the rotating shaft 30. When the foldable device 001 is in the unfolded state, and the first body 10, the second body 20, and the rotating shaft 30 are in the flattened state, the first body 10, the second body 20, and the rotating shaft 30 are sequentially arranged in an x direction.

For ease of description, a thickness direction of the foldable device 001 is defined as a first direction, and in the following and figures, a z direction indicates the first direction; and an axis extension direction of the rotating shaft 30 is defined as a second direction, and in the following and figures, a y direction indicates the second direction, where the x direction, the y direction, and the z direction are perpendicular to each other.

It may be understood that the foregoing perpendicularity may allow assembly errors and manufacturing errors. For example, that the x direction is perpendicular to the z direction is not limited to that an included angle between the x direction and the z direction is 90°. For example, the included angle between the x direction and the z direction may be 85° to 95°, for example, 85°, 87°, 88°, 89°, 90°, 91°, 92°, 93°, or 95°. The same applies to other descriptions about perpendicularity in this specification.

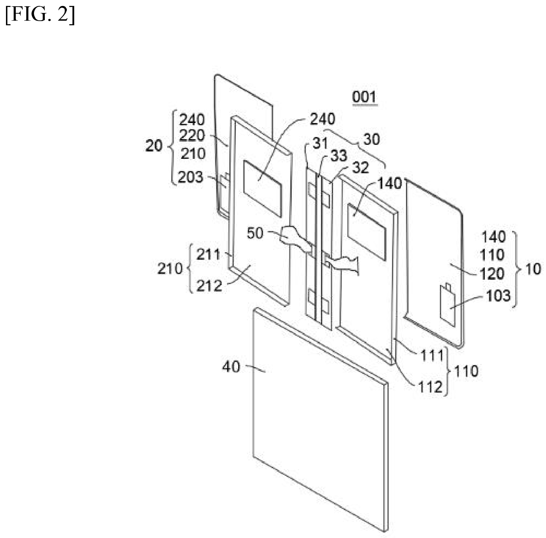

FIG. 2 is a diagram of a breakdown structure of the foldable device 001. Refer to FIG. 2. The first body 10 includes a first middle frame 110 and a first rear cover (rear cover) 120. The first middle frame 110 includes a first bezel 111 and a first middle plate 112. The first bezel 111 is connected to the rotating shaft 30.

The first middle plate 112 is located in a region formed by the first bezel 111 through enclosing, and is connected to an inner wall of the first bezel 111. For example, the first bezel 111 and the first middle plate 112 are connected to form a monolithic molded part. The first rear cover 120 is connected to the first bezel 111, and the first rear cover 120 and the first middle plate 112 are stacked in the z direction.

In some embodiments, there is spacing between the first rear cover 120 and the first middle plate 112, and the first rear cover 120, the first middle plate 112, and the first bezel 111 jointly form accommodating space through enclosing. Components such as a circuit board and a battery of the foldable device 001 are accommodated in the accommodating space.

For example, the first body 10 may further include a first printed circuit board (printed circuit board, PCB) 140. In some embodiments, the first printed circuit board 140 is located between the first rear cover 120 and the first middle plate 112. In some embodiments, the first middle plate 112 is located between the first printed circuit board 140 and the first rear cover 120.

It may be understood that the first middle frame 110, the first rear cover 120, the first printed circuit board 140, and the like are merely examples of a part of components on the first body 10. The first body 10 may be further equipped with a component like a camera, an antenna, or a sensor.

The second body 20 may include a second middle frame 210 and a second rear cover 220, and the second middle frame 210 may include a second bezel 211 and a second middle plate 212. The second bezel 211 is connected to the rotating shaft 30. The second body 20 may also include a second printed circuit board 240. For a structural description of the second body 20, refer to the foregoing description of the first body 10.

It may be understood that, the components accommodated in the accommodating space of the first body 10 may not be completely the same as those accommodated in accommodating space of the second body 20. The first middle plate 112 and the second middle plate 212 may have different shapes. This is not limited in embodiments of this application.

In some embodiments, the foldable device 001 further includes a flexible circuit (flexible printed circuit, FPC) board 50, one end of the flexible circuit board 50 is located on the first body 10, and the other end of the flexible circuit board 50 is located on the second body 20. The component on the first body 10 and the component on the second body 20 may communicate with each other through a signal cable formed on the flexible circuit board 50. For example, the end of the flexible circuit board 50 is electrically connected to the first printed circuit board 140, and the other end of the flexible circuit board 50 is electrically connected to the second printed circuit board 240.

In some embodiments, the flexible circuit board 50 penetrates the rotating shaft 30, and a thickness of the rotating shaft 30 in the z direction may be fully used to reduce a thickness of the foldable device 001. In addition, in a process of folding or unfolding the foldable device 001, the rotating shaft 30 may further restrict movement space of the flexible circuit board 50, to avoid a large movement amplitude of the flexible circuit board 50 in the z direction.

A structure of the rotating shaft 30 is not limited in embodiments of this application. For example, the rotating shaft 30 includes a first door plate 31, a second door plate 32, and a shaft body 33. When the foldable device 001 is in the flattened state, the first door plate 31, the second door plate 32, and the shaft body 33 are arranged in the x direction. The first door plate 31 is rotatably connected to the shaft body 33. For example, the first door plate 31 is rotatably connected to the shaft body 33 through an arc groove and a sliding block. In an embodiment in which the flexible circuit board 50 penetrates the rotating shaft 30, the flexible circuit board 50 penetrates the arc groove. Alternatively, the first door plate 31 is rotatably connected to the shaft body 33 via a hinge. Similarly, the second door plate 32 is rotatably connected to the shaft body 33. For example, the second door plate 32 is rotatably connected to the shaft body 33 through an arc groove and a sliding block; or the second door plate 32 is rotatably connected to the shaft body 33 via a hinge. The first bezel 111 is connected to the first door plate 31, for example, through screwing or clamping. The second bezel 211 is connected to the second door plate 32, for example, through screwing or clamping.

In some embodiments, the foldable device 001 may further include a flexible display (display) 40. The first body 10, the second body 20, and the rotating shaft 30 jointly support the flexible display 40. When the foldable device 001 is in the folded state, an included angle between a surface that is of the first body 10 and that faces the flexible display 40 and a surface that is of the second body 20 and that faces the flexible display 40 may be -10° to +10°, and an opening of the included angle faces the flexible display 40, for example, the included angle may be ±10°, ±9°, ±8°, ±7°, ±6°, ±5°, ±4°, ±3°, ±2°, ±1°, or 0°. When the foldable device 001 is in the flattened state, an included angle between a surface that is of the first body 10 and that faces the flexible display 40 and a surface that is of the second body 20 and that faces the flexible display 40 may be 170° to 190°, and an opening of the included angle faces the flexible display 40, for example, the included angle may be 170°, 172°, 175°, 178°, 179°, 180°, 181°, 182°, 185°, 188°, or 190°.

A folding type of the foldable device 001 is not limited in embodiments of this application. In some embodiments, the foldable device 001 is of an inward folding structure. To be specific, when the foldable device 001 is in a folded state, the flexible display 40 is located between the first body 10 and the second body 20. In some other embodiments, the foldable device 001 is of an outward folding structure. To be specific, when the foldable device 001 is in the folded state, both the first body 10 and the second body 20 are located between two opposite ends of the flexible display 40.

For example, the flexible display 40 may be a liquid crystal display (liquid crystal display, LCD), an organic light-emitting diode (organic light-emitting diode, OLED) display, an active-matrix organic light-emitting diode (active-matrix organic light-emitting diode, AMOLED) display, a flexible light-emitting diode (flexible light-emitting diode, FLED) display, a mini-LED display, a micro-LED display, a micro-OLED display, a quantum dot light-emitting diode (quantum dot light-emitting diode, QLED) display, or the like.

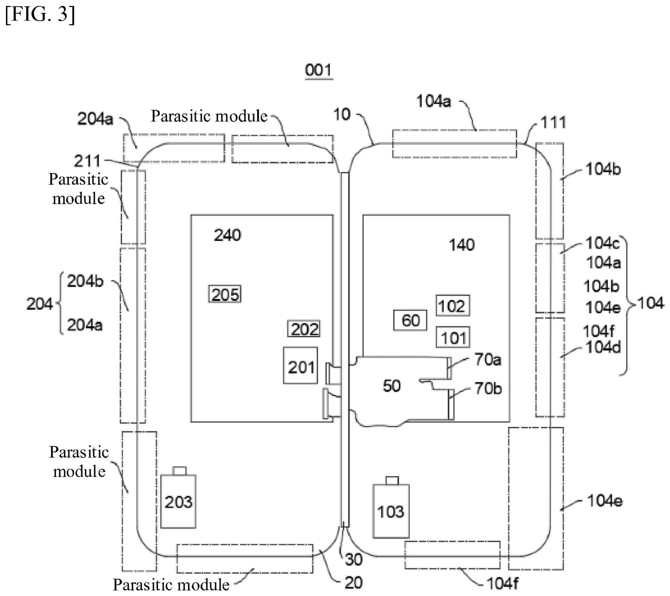

FIG. 3 is a diagram of a structure of antenna distribution of the foldable device 001 according to an embodiment of this application. Refer to FIG. 3. In this embodiment of this application, the foldable device 001 further includes a radio frequency integrated circuit (radio frequency integrated circuit, RFIC) 101, a first power management chip 102, a first battery 103, a system on chip (system on chip, SoC) 201, a second power management chip 202, and a second battery 203. The radio frequency integrated circuit 101 is configured to generate a radio frequency signal after performing radio frequency processing on data sent by the system on chip 201. The system on chip 201 is configured to perform data receiving and data sending with the radio frequency integrated circuit 101.

In some embodiments, the power management chip is also referred to as a power management unit (power management unit, PMU). The radio frequency integrated circuit 101 may include a radio frequency transceiver (radio frequency transceiver, RF transceiver) and a radio frequency system (Radio Frequency system, RF system).

For example, the system on chip 201 may include an application processor (application processor, AP) and a modem (Modem). The application processor is configured to control an application program. The modem is configured to control a network standard, an internet access speed, a download speed, and the like.

The radio frequency integrated circuit 101, the first power management chip 102, and the first battery 103 are all disposed on the first body 10. The system on chip 201, the second power management chip 202, and the second battery 203 are all disposed on the second body 20. Both the radio frequency integrated circuit 101 and the system on chip 201 are electrically connected to the flexible circuit board 50. The system on chip 201 exchanges a signal with the radio frequency transceiver in the radio frequency integrated circuit 101 via the flexible circuit board 50.

The first battery 103 is electrically connected to the first power management chip 102, the first battery 103 is configured to supply power to the first power management chip 102, and the first power management chip 102 is configured to supply power to the radio frequency integrated circuit 101. The second battery 203 is electrically connected to the second power management chip 202, the second battery 203 is configured to supply power to the second power management chip 202, the second power management chip 202 is configured to supply power to the system on chip 201, and the second power management chip 202 does not supply power to the first power management chip 102.

In this way, the system on chip 201 and the radio frequency integrated circuit 101 are respectively disposed on different bodies of the foldable device 001. This avoids congestion of a component on a body caused when the system on chip 201 and the radio frequency integrated circuit 101 are disposed on the same body, and helps make allocation of a component on the two bodies more reasonable. More space can be reserved for other components (such as batteries). In addition, because power of the system on chip 201 and the radio frequency integrated circuit 101 is high, the system on chip 201 and the radio frequency integrated circuit 101 are respectively disposed on the two bodies, to avoid large local heat generated when the foldable device 001 operates, and improve heat dissipation performance of the foldable device 001.

In addition, because the second power management chip 202 disposed on the second body 20 does not supply power to the first power management chip 102 disposed on the first body 10, a power cable that supplies power to the first power management chip 102 may be disposed only on the first body 10. In other words, the power cable that supplies power to the first power management chip 102 does not need to extend to the rotating shaft 30 and the second body 20. A power cable that needs to extend from the second body 20 to the first body 10 is reduced. For example, only a charging cable for charging the first battery 103 may be disposed, so that power cable accommodating space of the rotating shaft 30 is reduced, and a size of the power cable accommodating space of the rotating shaft 30 is reduced. This facilitates miniaturization of the foldable device 001 while improving support strength of the rotating shaft 30.

That the power cable does not need to extend to the rotating shaft 30 and the second body 20 means that the power cable does not need to be directly connected to components on the rotating shaft 30 and the second body 20. In some scenarios, the power cable and the rotating shaft 30 may be allowed to be stacked. In other words, a projection of the power cable on the rotating shaft 30 may be allowed to overlap the rotating shaft 30. For example, the power cable may cover a part of the rotating shaft 30 based on an arrangement requirement of a component on the first body 10.

For example, the flexible circuit board 50 (as shown in FIG. 2) does not need to be equipped with the power cable that extends from the second body 20 through the rotating shaft 30 to the first body 10. For example, 25 to 40 pins (pins) on the flexible circuit board 50 may be reduced. This helps reduce a size of the flexible circuit board 50 in the y direction. In an embodiment in which the flexible circuit board 50 penetrates the rotating shaft 30, a size of the flexible circuit board 50 is reduced, and space used by the rotating shaft 30 to accommodate the flexible circuit board 50 is reduced. This reduces space of the rotating shaft 30 and avoids a problem that mechanical strength of the rotating shaft 30 is reduced due to large space.

Further, the second power management chip 202 does not supply power to the radio frequency integrated circuit 101. In this way, a power cable that supplies power to the radio frequency integrated circuit 101 does not need to extend to the rotating shaft 30 and the second body 20. This reduces the power cable accommodating space of the rotating shaft 30.

In embodiments of this application, a power cable is a line configured to supply power to a component, and is disposed on a discharge path of a power supply. The power cable is different from a signal cable for transmitting a signal to the component in terms of function. The same applies to other descriptions about the power cable in this specification.

In some embodiments, the foldable device 001 further includes a cellular antenna 104 and a short-range antenna 204. The cellular antenna 104 is disposed on the first body 10 and is electrically connected to the radio frequency integrated circuit 101. The short-range antenna 204 is disposed on the second body 20, and the short-range antenna 204 is electrically connected to the system on chip 201. After receiving third data sent by the system on chip 201, the short-range antenna 204 may transmit the data by using a short-range communication technology. The radio frequency integrated circuit 101 receives data sent by the system on chip 201. The radio frequency integrated circuit 101 generates the radio frequency signal after performing radio frequency processing on the data sent by the system on chip 201. The radio frequency integrated circuit 101 sends the radio frequency signal to the cellular antenna 104. The cellular antenna 104 receives and transmits radio frequency signals by using a mobile cellular communication technology.

Compared with that both the cellular antenna 104 and the short-range antenna 204 are disposed on a same body, the cellular antenna 104 and the short-range antenna 204 are respectively disposed on the two bodies. The cellular antenna 104 has more optional disposing positions, space for disposing the cellular antenna 104 is larger, and the cellular antenna 104 has more optional disposing shapes, and may be disposed preferably, so that the cellular antenna 104 has a better function. Similarly, space for disposing the short-range antenna 204 is larger, and the short-range antenna 204 has more optional disposing positions and disposing shapes, and may be disposed preferably, so that the short-range antenna 204 has a better function.

For example, the cellular antenna 104 may be disposed on the first bezel 111, and the short-range antenna 204 may be disposed on the second bezel 211. The cellular antenna 104 and the short-range antenna 204 are respectively disposed on the two bodies. In an embodiment in which the cellular antenna 104 and the short-range antenna 204 are slot antennas, the first bezel 111 may be provided with fewer slots, and the second bezel 211 may be provided with fewer slots, so that appearances of the first bezel 111 and the second bezel 211 are more complete. In all scenarios, the industry universal standards can be met, and good communication experience can be ensured.

For example, the cellular antenna 104 is an antenna that supports the mobile cellular communication technology. There may be a plurality of cellular antennas 104. For example, in FIG. 3, the cellular antenna 104 includes a first cellular antenna 104a, a second cellular antenna 104b, a third cellular antenna 104c, a fourth cellular antenna 104d, a fifth cellular antenna 104e, and a sixth cellular antenna 104f.

In some embodiments, the cellular antenna 104 may include a parasitic module, and the parasitic module may be a medium and high frequency (medium and high frequency, MHF) parasitic module, or may be a low frequency (low frequency, LF) parasitic module. The parasitic module of the cellular antenna 104 may be disposed on the second body 20, for example, disposed on the second bezel 211 of the second body 20.

The short-range antenna 204 is an antenna of the short-range communication technology. The short-range antenna 204 may include a first short-range antenna 204a and a second short-range antenna 204b. For example, the short-range antenna 204 may include a global positioning system (global positioning system, GPS), a wireless communication technology (wireless fidelity, Wi-Fi), a Bluetooth module (Bluetooth module, BT), and the like.

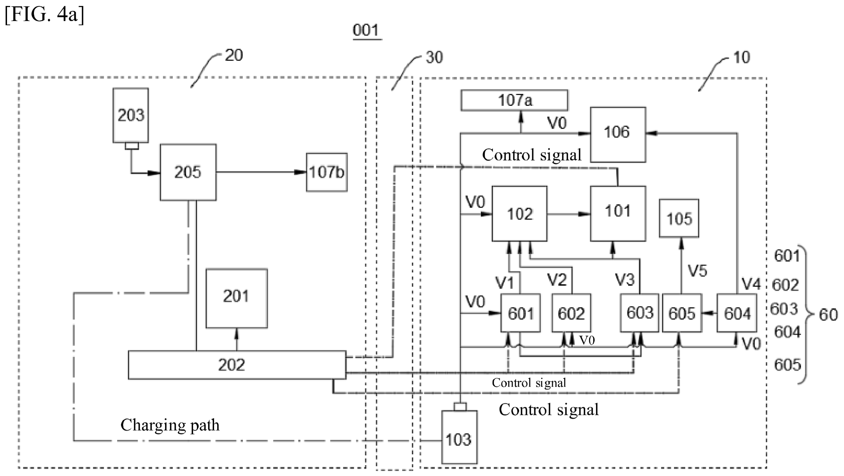

FIG. 4a is a brief diagram of a circuit structure of the foldable device 001 according to an embodiment of this application. Refer to FIG. 4a. The first battery 103 is configured to supply power to the first power management chip 102 and the radio frequency integrated circuit 101. The second battery 203 is configured to supply power to the system on chip 201 and the second power management chip 202.

Typically, the system on chip 201 and the second power management chip 202 have a plurality of operating voltages, and values of the plurality of operating voltages are not completely the same. The first power management chip 102 and the radio frequency integrated circuit 101 also have a plurality of operating voltages, and values of the plurality of operating voltages are not completely the same.

For example, the first battery 103 is configured to provide a power supply voltage V0. In some embodiments, the foldable device 001 further includes a voltage regulator circuit 60, and the voltage regulator circuit 60 is disposed on the first body 10. The voltage regulator circuit 60 is electrically connected to the first battery 103. The voltage regulator circuit 60 is configured to: reduce the power supply voltage V0 and provide a reduced voltage for the first power management chip 102 and the radio frequency integrated circuit 101.

Because the first battery 103, the voltage regulator circuit 60, the first power management chip 102, and the radio frequency integrated circuit 101 are all disposed on the first body 10, a power cable electrically connecting the first battery 103 to the voltage regulator circuit 60, a power cable electrically connecting the voltage regulator circuit 60 to the first power management chip 102, and a power cable electrically connecting the voltage regulator circuit 60 to the radio frequency integrated circuit 101 are all located on the first body 10. The foregoing power cables do not need to extend to the rotating shaft 30 and the second body 20, and do not need to be electrically connected to a component on the rotating shaft 30 and the second body 20. This reduces a quantity and length of power cables on the second body 20. This also reduces the power cable accommodating space of the rotating shaft 30. This facilitates miniaturization of the foldable device 001.

A value of the power supply voltage V0 is not limited in embodiments of this application. Setting may be performed based on a use scenario of the foldable device 001. For example, the value of the power supply voltage V0 may be 3.0 V (volt) to 4.53 V. For example, the value of the power supply voltage V0 may be 3.8 V, 3.9 V, 4.0 V, 4.1 V, 4.2 V, or the like.

In some embodiments, the voltage regulator circuit 60 may include a first voltage step-down component 601, a second voltage step-down component 602, and a first voltage regulation component 603. The first voltage step-down component 601, the second voltage step-down component 602, and the first voltage regulation component 603 are all disposed on the first body 10. For example, the first voltage step-down component 601, the second voltage step-down component 602, and the first voltage regulation component 603 are all disposed on the first printed circuit board 140 (as shown in FIG. 2). Both the first voltage step-down component 601 and the second voltage step-down component 602 are electrically connected to the first battery 103. The first battery 103 is configured to provide the power supply voltage V0 for the first power management chip 102, the first voltage step-down component 601, and the second voltage step-down component 602. The first voltage step-down component 601 is configured to: reduce the power supply voltage V0 to a first voltage V1 and provide the first voltage V1 for the first power management chip 102. The second voltage step-down component 602 is configured to: reduce the power supply voltage V0 to a second voltage V2 and provide the second voltage V2 for the first power management chip 102. The first voltage regulation component 603 is electrically connected to the first voltage step-down component 601, and the first voltage regulation component 603 is configured to: reduce the first voltage V1 to a third voltage V3 and provide the third voltage V3 for the first power management chip 102 and the radio frequency integrated circuit 101. In this way, the voltage regulator circuit 60 reduces the power supply voltage V0 to obtain the first voltage V1, the second voltage V2, and the third voltage V3, provides the first voltage V1, the second voltage V2, and the third voltage V3 for the first power management chip 102, and provides the third voltage V3 for the radio frequency integrated circuit 101. The foregoing power cables that provide the first voltage V1, the second voltage V2, and the third voltage V3 are all disposed on the first body 10, and the power cables do not need to extend to the rotating shaft 30 and the second body 20, so that a layout of the power cables is more compact, thereby facilitating miniaturization of the foldable device.

Values of the first voltage V1, the second voltage V2, and the third voltage V3 are set based on requirements of the first power management chip 102 and the radio frequency integrated circuit 101. For example, a value of the first voltage V1 may be 1.8 V to 2.0 V, and the value of the first voltage V1 may be, for example, 1.8 V, 1.85 V, 1.90 V, 1.95 V, or 2.0 V. A value of the second voltage V2 may be 0.8 V to 1.0 V, and the value of the second voltage V2 may be, for example, 0.8 V, 0.85 V, 0.90 V, 0.95 V, or 1.0 V. The third voltage V3 is lower than the first voltage V1. A value of the third voltage V3 may be 1.7 V to 1.9 V, and the value of the third voltage V3 may be, for example, 1.7 V, 1.75 V, 1.8 V, 1.85 V, or 1.90 V.

Both the voltage regulation component and the voltage step-down components have a function of reducing a voltage. For example, the voltage step-down component is applicable to a scenario in which a current is high and a voltage fluctuation requirement is not high. The voltage regulation component is applicable to a scenario in which a current is low and voltage fluctuation is small.

A type of the first voltage step-down component 601 is not limited in embodiments of this application. For example, the first voltage step-down component 601 may include, for example, an external buck switching power supply (external buck). A type of the first voltage regulation component 603 is not limited in embodiments of this application. For example, the first voltage regulation component 603 may include, for example, an external voltage regulation chip (External LDO).

For example, the first power management chip 102 is configured to supply power to the radio frequency integrated circuit 101, and a voltage supplied by the first power management chip 102 to the radio frequency integrated circuit 101 may be set based on an operating voltage of a component in the radio frequency integrated circuit 101.

In some embodiments, the foldable device 001 may further include a radio frequency switch (radio frequency switch) 105, and the radio frequency switch 105 is disposed on the first body 10. The voltage regulator circuit 60 may further include a third voltage step-down component 604 and a second voltage regulation component 605. Both the third voltage step-down component 604 and the second voltage regulation component 605 are disposed on the first body 10. The third voltage step-down component 604 is electrically connected to the first battery 103. The first battery 103 is configured to provide the power supply voltage VO for the third voltage step-down component 604. The third voltage step-down component 604 is configured to: reduce the power supply voltage V0 to a fourth voltage V4 and provide the fourth voltage V4 for the second voltage regulation component 605. The second voltage regulation component 605 is electrically connected to the third voltage step-down component 604, and the second voltage regulation component 605 is configured to: reduce the fourth voltage V4 to a fifth voltage V5 and provide the fifth voltage V5 for the radio frequency switch 105.

Similar to the foregoing description, both the radio frequency switch 105 and the power cables that provide the fourth voltage V4 and the fifth voltage V5 are disposed on the first body 10. The foregoing power cables do not need to extend to the rotating shaft 30, and the rotating shaft 30 does not need space for accommodating the power cable. This avoids reduced support strength of the rotating shaft 30 and increased process difficulty of the rotating shaft 30 caused by the accommodating space.

For example, a value of the fourth voltage V4 may be 3.3 V to 3.6 V, and the value of the fourth voltage V4 may be, for example, 3.3 V, 3.4 V, 3.45 V, 3.5 V, 3.55 V, or 3.6 V. A value of the fifth voltage V5 may be 2.70 V to 3.0 V, and the value of the fifth voltage V5 may be, for example, 2.70 V, 2.75 V, 2.8 V, 2.85 V, 2.90 V, 2.95 V, or 3.0 V.

In some embodiments, the foldable device 001 may further include a radio frequency power amplifier (power amplifier, PA) 106, and the radio frequency power amplifier 106 is disposed with the first body 10. For example, the radio frequency power amplifier 106 is disposed on the first printed circuit board 140. Both the third voltage step-down component 604 and the first battery 103 are electrically connected to the radio frequency power amplifier 106. The third voltage step-down component 604 is further configured to provide the fourth voltage V4 for the radio frequency power amplifier 106. The first battery 103 is further configured to provide the power supply voltage V0 for the radio frequency power amplifier 106.

Similarly, a power cable that supplies power to the radio frequency power amplifier 106 may be disposed only on the first body 10, and does not need to extend to the rotating shaft 30 and the second body 20. The rotating shaft 30 does not need space for accommodating the power cable. This avoids reduced support strength of the rotating shaft 30 and increased process difficulty of the rotating shaft 30 caused by the accommodating space.

In addition, power of the radio frequency power amplifier 106 and the system on chip 201 is high. When the foldable device 001 operates, both the radio frequency power amplifier 106 and the system on chip 201 release much heat. The radio frequency power amplifier 106 and the system on chip 201 are respectively disposed on the first body 10 and the second body 20, to avoid concentration of heat released by the radio frequency power amplifier 106 and the system on chip 201. This improves heat dissipation performance of the foldable device 001. Compared with that both the radio frequency power amplifier 106 and the system on chip 201 are disposed on a same body, the radio frequency power amplifier 106 and the system on chip 201 are respectively disposed on different bodies. In both a scenario in which a communication signal is good and a scenario in which a communication signal is poor (for example, a user uses the foldable device with a poor signal such as underground), heat dissipation performance of the foldable device 001 is improved well. In the scenario in which the communication signal is good, the heat dissipation performance of the foldable device 001 in a folded state is improved by 2 mA/°C (mA/°C) to 5 mA/°C, and the heat dissipation performance of the foldable device 001 in a flattened state is improved by 6 mA/°C to 9 mA/°C. In the scenario in which the communication signal is poor, the heat dissipation performance of the foldable device 001 in the folded state is improved by 6 mA/°C to 9 mA/°C, and the heat dissipation performance of the foldable device 001 in the flattened state is improved by 10 mA/°C to 13 mA/°C.

A position relationship of the radio frequency power amplifier 106 on the first body 10 is not limited in embodiments of this application. For example, the radio frequency power amplifier 106 is located at an edge that is of the first body 10 and that is away from the rotating shaft 30. In this way, a distance between the radio frequency power amplifier 106 and the cellular antenna 104 (as shown in FIG. 3) disposed on the first bezel 111 (as shown in FIG. 3) is small, and a signal transmission distance between the radio frequency power amplifier 106 and the cellular antenna 104 can be shortened.

In addition, the radio frequency power amplifier 106 is disposed at the edge that is of the first body 10 and that is away from the rotating shaft 30. The first printed circuit board 140 configured to carry the radio frequency power amplifier 106 is also disposed close to the edge that is of the first body 10 and that is away from the rotating shaft 30. The first battery 103 may be disposed between the rotating shaft 30 and the first printed circuit board 140. In this way, space for accommodating the first battery 103 on the first body 10 is correspondingly increased, and the first battery 103 with a large size and high storage energy may be disposed.

In this embodiment of this application, the voltage regulator circuit 60 is not limited to including the first voltage step-down component 601, the second voltage step-down component 602, the first voltage regulation component 603, the third voltage step-down component 604, and the second voltage regulation component 605. In some embodiments, the voltage regulator circuit 60 may further include a fourth voltage step-down component, a fifth voltage step-down component, a sixth voltage step-down component, and the like. The voltage regulator circuit 60 may further include a third voltage regulation component, a fourth voltage regulation component, a fifth voltage regulation component, and the like. Setting may be performed based on an operating voltage of the first power management chip 102 and an operating voltage of the radio frequency integrated circuit 101.

It may be understood that, in this embodiment of this application, the first battery 103 is not limited to supplying power to the radio frequency power amplifier 106, the radio frequency switch 105, the first power management chip 102, and the radio frequency integrated circuit 101. In some embodiments, the first body 10 may be further equipped with a hardware module 107a, and the first battery 103 supplies power to the hardware module 107a. A voltage supplied to the hardware module 107a is set based on an operating voltage of the hardware module 107a.

As mentioned above, the second battery 203 supplies power to the second power management chip 202, and the second power management chip 202 supplies power to the system on chip 201. In some embodiments, the second power management chip 202 and the system on chip 201 may be integrated together. In some embodiments, the second power management chip 202 and the system on chip 201 may be disposed independently.

Similarly, the second battery 203 is not limited to supplying power only to the second power management chip 202 and the system on chip 201. The second battery 203 may also supply power to a hardware module 107b disposed on the second body 20.

For example, the hardware module 107a (107b) may be, for example, an audio module, an audio module, a speaker, a receiver, a microphone, a sensor, a memory, a button, a front-facing camera, a rear-facing camera, a display, an antenna chip, a secure digital (secure digital, SD) card, and a subscriber identification module (subscriber identification module, SIM). The antenna chip may include a Wi-Fi antenna chip, a BT antenna chip, a near field communication (near field communication, NFC for short) antenna chip, and the like. The memory may include, for example, a double data rate synchronous dynamic random access memory (double data rate synchronous dynamic random access memory, DDR SDRAM), a universal flash storage (universal flash storage, UFS), and the like.

The hardware module 107a (107b) may be disposed on the first body 10 or the second body 20 as required. In some embodiments, signal quality deterioration caused by passing the rotating shaft 30 by a signal cable connecting the rear-facing camera to the system on chip 201 may be avoided, and the rear-facing camera is disposed on the second body 20.

In some embodiments, the foldable device 001 may further include a charging manager (charger) 205. The charging manager 205 is disposed on the second body 20. Both the first battery 103 and the second battery 203 are electrically connected to the charging manager 205. The charging manager 205 is electrically connected to the first battery 103 and the second battery 203 through a charging cable. For example, the second body 20 is further equipped with a charging terminal, and the charging terminal is electrically connected to the charging manager 205 through a charging cable. When the foldable device 001 is charged, the charging terminal is connected to a power supply, and a current flows to the charging manager 205 through the charging terminal, and then charges the first battery 103 and the second battery 203 via the charging manager 205.

For example, the charging terminal may include, for example, a universal serial bus (universal serial bus, USB) interface. The USB interface may be a mini USB interface, a micro USB interface, a USB type-C interface, or the like. In addition, in this application, a function of the charging terminal is not limited to being used only for charging. For example, the charging terminal may also be used to transmit data between the foldable device 001 and another device (for example, a mobile phone, a computer, or a removable hard disk).

In this embodiment of this application, the first battery 103 supplies power to the first power management chip 102 and the radio frequency integrated circuit 101, and the second battery 203 supplies power to the second power management chip 202 and the system on chip 201. Power consumption of the component on the first body 10 is different from that of the component on the second body 20. In some use scenarios, a battery level of the first battery 103 may be less than that of the second battery 203, or a battery level of the second battery 203 may be less than that of the first battery 103. In this way, the charging manager 205 may control a battery with a higher battery level to charge a battery with a lower battery level.

In some embodiments of this application, a charging manager may also be disposed on the second body 20. For example, the charging terminal is electrically connected to the charging manager 205 disposed on the first body 10 and the charging manager disposed on the second body 20 separately.

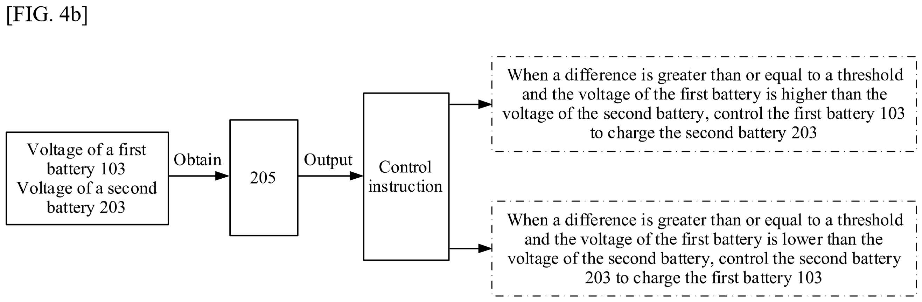

FIG. 4b is a control diagram of the charging manager 205 according to an embodiment of this application. Refer to FIG. 4b. For example, the charging manager 205 is configured to: obtain a voltage of the first battery 103 and a voltage of the second battery 203, and output a control instruction based on a difference between the voltage of the first battery 103 and the voltage of the second battery 203. The control instruction is used to: when the difference is greater than or equal to a threshold and the voltage of the first battery is higher than the voltage of the second battery, control the first battery 103 to charge the second battery 203. Alternatively, the control instruction is used to: when the difference is greater than or equal to a threshold and the voltage of the first battery is lower than the voltage of the second battery, control the second battery 203 to charge the first battery 103. In this way, the charging manager 205 can control the difference between the voltage of the first battery 103 and the voltage of the second battery 203 to be small, and to be less than the threshold. This avoids a problem that a battery level of one of the first battery 103 and the second battery 203 is low and a battery level of the other battery is high.

A value of the threshold may be set as required. Further, the charging manager 205 controls the second battery 203 to charge the first battery 103 until a voltage difference between the second battery 203 and the first battery 103 is small.

For example, when the difference is greater than or equal to a first threshold and the voltage of the first battery is higher than the voltage of the second battery, the first battery 103 is controlled to charge the second battery 203 until the difference is less than or equal to a second threshold. The second threshold is less than the first threshold. A difference between the second threshold and the first threshold may be set as required. Similarly, when the difference is greater than or equal to the first threshold and the voltage of the first battery is lower than the voltage of the second battery, the second battery 203 is controlled to charge the first battery 103 until the difference is less than or equal to the second threshold.

It may be understood that the second power management chip 202 does not supply power to the first power management chip 102, and the second power management chip 202 does not supply power to the radio frequency integrated circuit 101 either. That the second power management chip 202 is not electrically connected to the first power management chip 102 is not limited, and that the second power management chip 202 is not electrically connected to the second power management chip 202 is not limited.

As shown in FIG. 4a, in some embodiments, the radio frequency integrated circuit 101, the first voltage step-down component 601, the second voltage step-down component 602, and the third voltage step-down component 604 are all electrically connected to the second power management chip 202 through a signal cable (for example, a fifth signal cable described below). The second power management chip 202 is electrically connected to an enabling end of the radio frequency integrated circuit 101. The foregoing enabling end is a control end for enabling or disabling a function of the radio frequency integrated circuit 101.

As described above, the system on chip 201 disposed on the second body 20 exchanges, via the flexible circuit board 50 (as shown in FIG. 3), a signal with the radio frequency transceiver in the radio frequency integrated circuit 101 disposed on the first body 10. It may be understood that signal exchange between the first body 10 and the system on chip 201 is not limited to the radio frequency integrated circuit 101. For example, a part or all of the hardware module 107a disposed on the first body 10 also need to exchange a signal with the system on chip 201. In this way, a signal cable used for signal exchange between the hardware module 107a and the system on chip 201 needs to extend from the first body 10 to the second body 20.

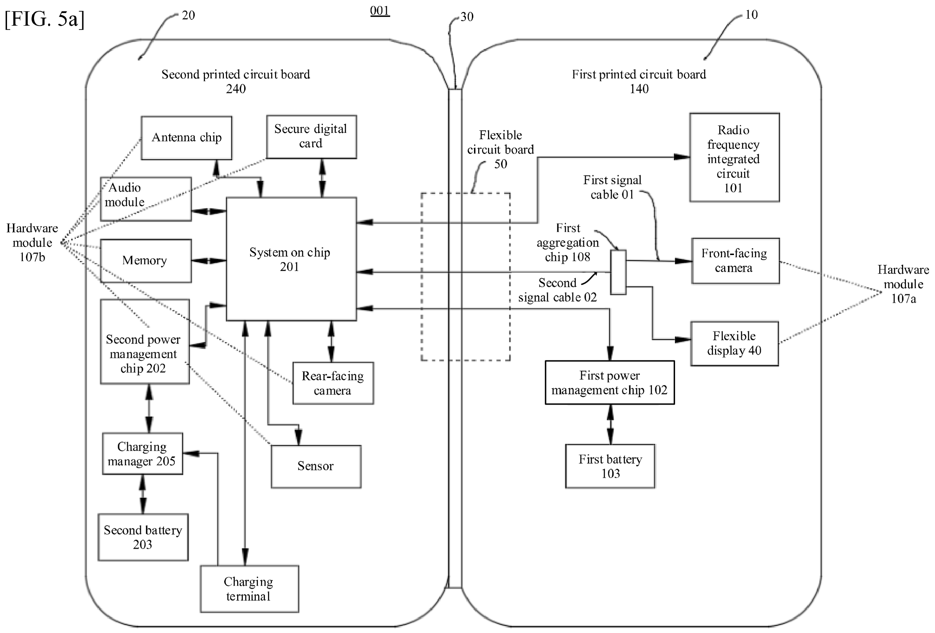

FIG. 5a is a brief diagram of a cabling structure of the hardware module 107a on the foldable device 001 according to an embodiment of this application. Refer to FIG. 5a. The hardware module 107b includes the antenna chip, the SD card, the SIM card, the audio module, the memory, the rear-facing camera, and the sensor. The hardware module 107b is disposed on the second body 20. The hardware module 107a includes the front-facing camera and the flexible display 40. It may be understood that a distribution relationship of the hardware modules 107a(b) in FIG. 5a is merely an example, and types of the hardware modules disposed on the first body 10 and the second body 20 are not limited in embodiments of this application. For example, the antenna chip, the SD card, the SIM card, the audio module, the memory, and the like may alternatively be disposed on the first body 10.

In some embodiments, to reduce a quantity of signal cables used for signal exchange between the hardware module 107a and the system on chip 201, a first aggregation chip 108 may be disposed on the first body 10. The first aggregation chip 108 is configured to aggregate a signal, to reduce a signal cable for electrically connecting the transmission hardware module 107a to the system on chip 201.

For example, the foldable device 001 may further include a first signal cable 01 and a second signal cable 02. The transmission hardware module 107a is electrically connected to the first aggregation chip 108 through the first signal cable 01. The system on chip 201 is electrically connected to the first aggregation chip 108 through the second signal cable 02. For example, the second signal cable 02 is disposed on the flexible circuit board 50. A quantity of first signal cables 01 is greater than a quantity of second signal cables 02. Because both the transmission hardware module 107a and the first aggregation chip 108 are disposed on the first body 10, the first signal cable 01 is also located on the first body 10. The system on chip 201 is disposed on the second body 20, and the second signal cable 02 extends from the first body 10 to the second body 20. Because the quantity of first signal cables 01 is greater than the quantity of second signal cables 02, in a case in which signal exchange between the hardware module 107a and the system on chip 201 is met, reducing the quantity of signal cables can reduce signal cable accommodating space of the rotating shaft 30, so that the rotating shaft 30 has high support strength.

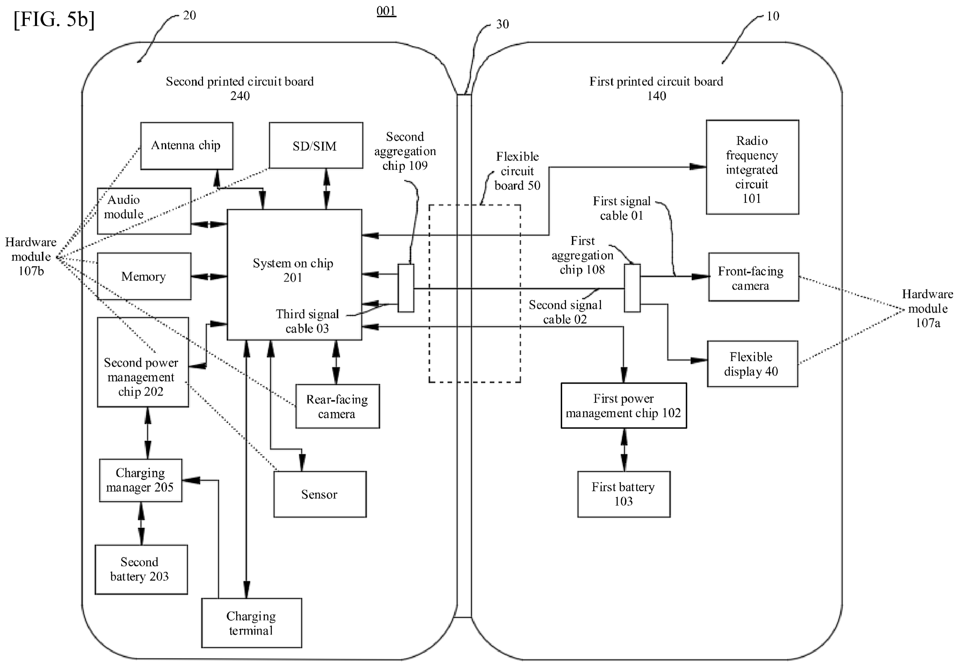

FIG. 5b is a brief diagram of another cabling structure of the hardware module 107a on the foldable device 001 according to an embodiment of this application. Refer to FIG. 5b. A difference between FIG. 5b and FIG. 5a lies in that, in FIG. 5b, the foldable device 001 further includes a third signal cable 03 and a second aggregation chip 109. The second aggregation chip 109 is disposed on the second body 20. The second aggregation chip 109 is electrically connected to the first aggregation chip 108 through the second signal cable 02. The second aggregation chip 109 is electrically connected to the system on chip 201 through the third signal cable 03. A quantity of third signal cables 03 is equal to the quantity of first signal cables 01.

A type of the first aggregation chip 108 is not limited in embodiments of this application. For example, the first aggregation chip 108 may be an input die (input/output die), or the like. In some embodiments, a peripheral component interconnect express (peripheral component interconnect express, PCIE) standard is used to perform communication and signal control on data of the first aggregation chip 108, and the PCIE is a high-speed serial bus. In some embodiments, the first aggregation chip 108 uses a series to series (serdes to serdes) standard.

Both a quantity of first signal cables 01 and a quantity of second signal cables 02 are not limited in embodiments of this application. Setting may be performed based on a requirement of signal exchange between the hardware module 107a and the system on chip 201. A difference between the quantity of first signal cables 01 and the quantity of second signal cables 02 is not limited either, provided that the quantity of first signal cables 01 is greater than the quantity of second signal cables 02.

As described above, the system on chip 201 and the radio frequency integrated circuit 101 exchange signals via the flexible circuit board 50. A loss on a link between the system on chip 201 and the radio frequency integrated circuit 101 may be reduced by reducing a signal loss of a signal passing through the flexible circuit board 50.

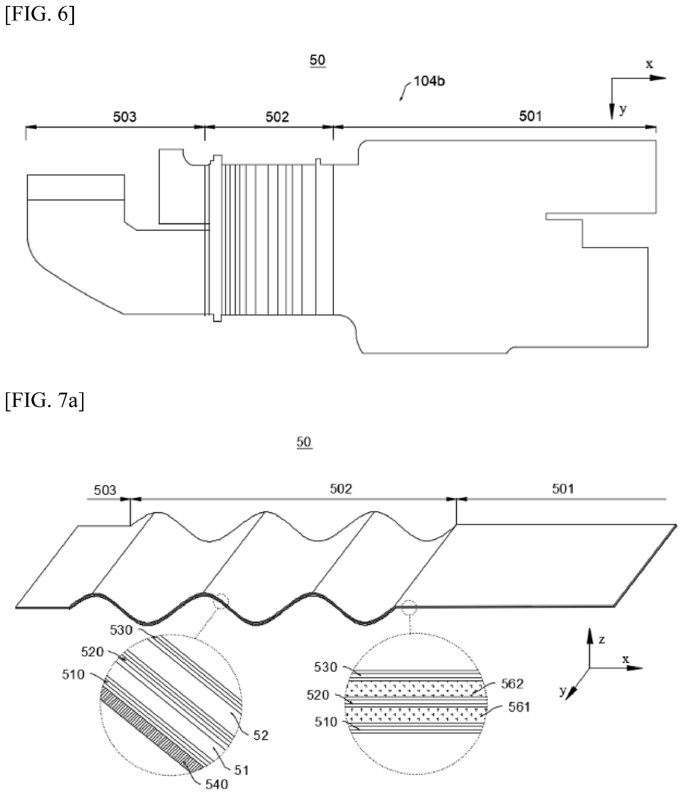

FIG. 6 is a diagram of a structure of the flexible circuit board 50 according to an embodiment of this application. Refer to FIG. 6. The flexible circuit board 50 has a first region 501 and a bending region 502. The first region 501 is connected to the bending region 502. When the foldable device is in the flattened state, a vertical projection of the rotating shaft 30 (as shown in FIG. 2) on the flexible circuit board 50 overlaps the bending region 502.

The vertical projection refers to a region enclosed by a projection of an outer profile of the rotating shaft 30 on a plane on which the flexible circuit board 50 is located in a direction perpendicular to the flexible circuit board 50. The same applies to other descriptions about the vertical projection in this specification.

In an embodiment in which the flexible circuit board 50 penetrates the rotating shaft 30 (as shown in FIG. 5a), the bending region 502 penetrates the rotating shaft 30. A thickness direction of the flexible circuit board 50 is a thickness direction of the foldable device, and the two thickness directions are the first direction (a z direction in FIG. 7a).

A length of the bending region 502 in the x direction is not limited in embodiments of this application. In some embodiments, when the foldable device 001 is in the unfolded state, the length of the bending region 502 in the x direction is greater than or equal to a length of the rotating shaft 30 in the x direction. In some embodiments, when the foldable device 001 is in the unfolded state, the length of the bending region 502 in the x direction may be less than a length of the rotating shaft 30 in the x direction.

When the foldable device is adjusted from the folded state to the flattened state, the bending region 502 is unfolded, and the bending region 502 may compensate for a length change of the flexible circuit board 50 in a process of being adjusted from the folded state to the flattened state, thereby reducing internal stress of the flexible circuit board 50.

The "bending" of the bending region 502 means that the bending region 502 has a bendable attribute, and does not mean that the bending region 502 is always in a bent state. For example, in FIG. 6, the bending region 502 has a plurality of wrinkles, and the plurality of wrinkles may be flattened or converged.

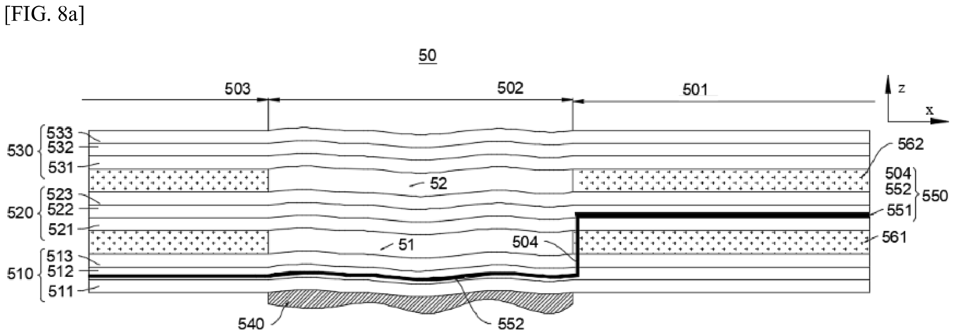

FIG. 7a is a diagram of a partial structure of the flexible circuit board 50 according to an embodiment of this application. Refer to FIG. 7a. The flexible circuit board 50 includes a fourth signal cable 550 (as shown in FIG. 8a), a shield layer 540, a first layer structure 510, a second layer structure 520, and a third layer structure 530. The radio frequency integrated circuit 101 is electrically connected to the system on chip 201 through the fourth signal cable 550.

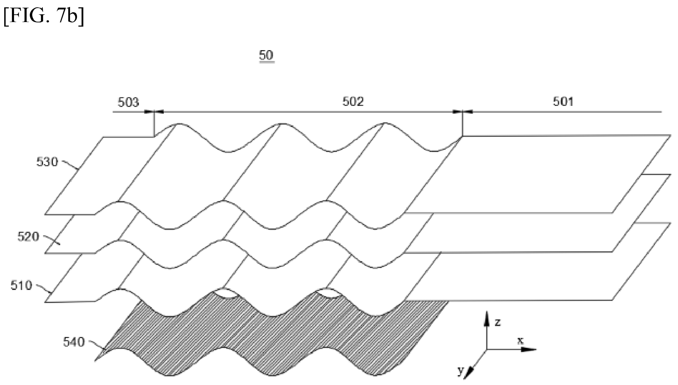

FIG. 7b is a diagram of a breakdown structure of the flexible circuit board 50 according to an embodiment of this application. Refer to FIG. 7b. The shield layer 540, the first layer structure 510, the second layer structure 520, and the third layer structure 530 are stacked in the z direction. The shield layer 540 is attached to the first layer structure 510, and the shield layer 540 is located in the bending region 502.

In the bending region 502 of the flexible circuit board 50, a first gap 51 exists between the first layer structure 510 and the second layer structure 520, and a second gap 52 exists between the second layer structure 520 and the third layer structure 530. Because the first layer structure 510, the second layer structure 520, and the third layer structure 530 are stacked in the z direction, and distances between the first layer structure 510, the second layer structure 520, and the third layer structure 530 and the rotating shaft 30 are different, in a process of folding the foldable device, arc lengths of movement of the first layer structure 510, the second layer structure 520, and the third layer structure 530 on the bending region 502 are different, and there is a relative motion trend between adjacent two of the first layer structure 510, the second layer structure 520, and the third layer structure 530. The first gap 51 and the second gap 52 may release the relative motion trend, so that the first layer structure 510, the second layer structure 520, and the third layer structure 530 are bent more smoothly, and the internal stress is released to avoid tearing the layer structure.

In addition, when the foldable device is adjusted from the folded state to the flattened state, the first region 501 does not move or moves a small distance. In the first region 501, the first layer structure 510, the second layer structure 520, and the third layer structure 530 do not move relative to each other or moves relative to each other at a small distance.

In this embodiment of this application, a length of the first gap 51 in the x direction is greater than or equal to the length of the bending region 502 in the x direction. In other words, the first gap 51 may be partially located in the first region 501. In some embodiments, a length of the first gap 51 in the direction x is greater than or equal to the length of the bending region 502 in the direction x. The same applies to a size of the second gap 52.

FIG. 8a is a sectional view of the flexible circuit board 50 according to an embodiment of this application. Refer to FIG. 8a. The first layer structure 510 includes a first coverage layer 511, a first conductive layer 512, and a first protection layer 513 that are sequentially stacked in the z direction. The shield layer 540 is attached to the first coverage layer 511, and the first coverage layer 511 is located between the shield layer 540 and the first conductive layer 512. The second layer structure 520 includes a second coverage layer 521, a second conductive layer 522, and a second protection layer 523 that are sequentially stacked in the z direction. The second coverage layer 521 is located between the first protection layer 513 and the second conductive layer 522. The first gap 51 is located between the second coverage layer 521 and the first protection layer 513. The third layer structure 530 includes a third coverage layer 531, a third conductive layer 532, and a third protection layer 533 that are sequentially stacked in the z direction. The third coverage layer 531 is located between the second protection layer 523 and the third conductive layer 532. The second gap 52 is located between the third coverage layer 531 and the second protection layer 523.

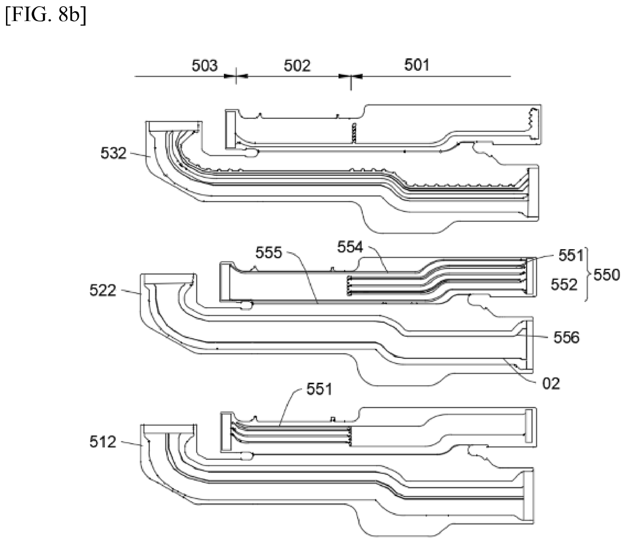

FIG. 8b is an exploded view of the first conductive layer 512, the second conductive layer 522, and the third conductive layer 532 according to an embodiment of this application. Refer to FIG. 8b. The fourth signal cable 550 includes a first conductive section 551 and a second conductive section 552 that are electrically connected to each other, the first conductive section 551 is located in the first region 501, and the second conductive section 552 is located in the bending region 502. The first conductive section 551 is formed in the second layer structure 520, and the second conductive section 552 is formed in the first layer structure 510.

Return to FIG. 8a. A vertical projection of the shield layer 540 on the first conductive layer 512 overlaps the second conductive section 552.

In the process of folding the foldable device, the first layer structure 510, the second layer structure 520, and the third layer structure 530 that are located in the first region 501 have small or almost no relative motion. Because the first conductive section 551 is located in the first region 501, a distance between the first conductive section 551 and the first conductive layer 512 in the z direction is almost unchanged. Similarly, a distance between the first conductive section 551 and the third conductive layer 532 in the z direction is almost unchanged. The first conductive section 551 almost does not cause a signal loss due to motion relative to the first conductive layer 512 and the third conductive layer 532, and a signal loss in the first conductive section 551 is small.

As described above, the first layer structure 510, the second layer structure 520, and the third layer structure 530 that are located in the bending region 502 may move relative to each other. In the process of folding the foldable device, a distance between the first conductive layer 512 and the second conductive layer 522 and a distance between the third conductive layer 532 and the second conductive layer 522 change continuously. If the second conductive section 552 is also formed on the second conductive layer 522, a change of the foregoing distance causes a large signal loss on the second conductive section 552. In this embodiment of this application, the second conductive section 552 is formed on the first conductive layer 512, so that a signal loss on the second conductive section 552 caused by the change of the foregoing distance can be effectively reduced. In addition, the shield layer 540 is attached to the first coverage layer 511, and a distance between the shield layer 540 and the second conductive section 552 almost remains unchanged. The vertical projection of the shield layer 540 on the first conductive layer 512 overlaps the second conductive section 552. The shield layer 540 has a function of avoiding interference to a signal of the second conductive section 552, and has low impact on a signal loss on the second conductive section 552.

For example, the fourth signal cable 550 is configured to transmit a high-speed radio frequency signal between the radio frequency integrated circuit 101 and the system on chip 201, and the fourth signal cable 550 may be considered as a high-speed radio frequency signal cable connecting the radio frequency integrated circuit 101 to the system on chip 201. Connectors (for example, BTB described below) are disposed at two ends of the high-speed radio frequency signal cable. The high-speed radio frequency signal may include a serializer (serializer) signal and a deserializer (deserializer) signal. For example, an operating frequency of the high-speed radio frequency signal may be, for example, in a range of 1 GHz (gigahertz) to 5.5 GHz. In some embodiments, the fourth signal cable 550 is a differential signal cable.

That the vertical projection of the shield layer 540 on the first conductive layer 512 overlaps the second conductive section 552 includes: The vertical projection of the shield layer 540 on the first conductive layer 512 covers a part of the second conductive section 552. Alternatively, the vertical projection of the shield layer 540 on the first conductive layer 512 covers the entire second conductive section 552. In this way, the shield layer 540 has good shielding performance on the second conductive section 552, so that impact of another cable on a signal of the second conductive section 552 can be reduced, and impact of the second conductive section 552 on another cable can also be reduced. In some embodiments, the shield layer 540 covers the entire bending region 502.

In some embodiments, the vertical projection of the shield layer 540 on the first conductive layer 512 does not completely cover the first region 501 because the first conductive layer 512 and the third conductive layer 532 in the first region 501 have a shielding function. The shield layer 540 does not completely cover the first region 501, so that a thickness of the first region 501 is small. This facilitates better flexibility of the flexible circuit board 50. For example, the vertical projection of the shield layer 540 on the first conductive layer 512 is located outside the first region 501.

It may be understood that, in this embodiment of this application, the flexible circuit board 50 is not limited to three layer structures. For example, the flexible circuit board 50 may further include a fourth layer structure, a fifth layer structure, and the like. The fourth layer structure, the fifth layer structure, and the like are located on a side that is of the third layer structure 530 and that is away from the second layer structure 520.

A structure of the shield layer 540 is not limited in embodiments of this application. For example, the shield layer 540 is an electromagnetic interference (electromagnetic interference, EMI) shielding film. The shield layer 540 may include a conductive film. In some embodiments, the shield layer 540 may further include a polymer film covering a surface of the conductive film. In some embodiments, the polymer film of the shield layer 540 and the first coverage layer 511 may be made from a same material, that is, the polymer film of the shield layer 540 and the first coverage layer 511 may be shared, or the polymer film of the shield layer 540 and the first coverage layer 511 may be considered as one film layer. For example, the shield layer 540 and the first coverage layer 511 may be connected to each other through an adhesive layer.

For example, the first conductive section 551 and the second conductive section 552 are electrically connected to each other through a conductive via 504. The conductive via 504 penetrates the first protection layer and the second coverage layer. In some embodiments, the conductive via 504 is located in the first region 501. In a process of folding the foldable device, the first region 501 almost does not bend, and the conductive via 504 almost does not deform. Therefore, connection performance of the first conductive section 551 and the second conductive section 552 is good. In some embodiments, the conductive via 504 may alternatively be disposed in the bending region 502.

Materials from which the first conductive layer 512, the second conductive layer 522, and the third conductive layer 532 are made are not limited in embodiments of this application. For example, the first conductive layer 512 may be made from at least one of copper and an alloy thereof, aluminum and an alloy thereof, titanium and an alloy thereof, carbon fiber, or graphene. For example, the first conductive layer 512 may be made from a rolled copper foil (rolled copper foil) or an electrodeposited copper foil (electrodeposited copper foil). The same applies to the second conductive layer 522 and the third conductive layer 532.

The first coverage layer 511 can prevent the first conductive layer 512 from being oxidized. The same applies to the second coverage layer 521 and the third coverage layer 531. Materials from which the first coverage layer 511, the second coverage layer 521, and the third coverage layer 531 are made are not limited in embodiments of this application. For example, the first coverage layer 511 may be made from at least one of polyimide (polyimide, PI) or polyester (polyester, PET). The same applies to the second coverage layer 521 and the third coverage layer 531.

The first protection layer 513 may support the first conductive layer 512 while preventing the first conductive layer 512 from being exposed to a surface. The same applies to the second protection layer 523 and the third protection layer 533. Materials from which the first protection layer 513, the second protection layer 523, and the third protection layer 533 are made are not limited in embodiments of this application. For example, the first protection layer 513 may be made from at least one of polyimide (polyimide, PI), polyester (polyester, PET), polytetrafluoroethylene (polytetrafluoroethylene, PTFE), or the like. The same applies to the second protection layer 523 and the third protection layer 533.

For example, conductors that are in the shield layer 540, the second conductive layer 522, the first conductive layer 512, and the third conductive layer 532 and that are not electrically connected to the fourth signal cable 550 are all electrically connected to a ground plane of the foldable device. For example, both the third conductive layer 532 and the shield layer 540 are electrically connected to the ground plane.

The foregoing ground plane may be at least a part of any grounding layer, or grounding plate, or grounding metal layer in the foldable device 001, or at least a part of any combination of any grounding layer, or grounding plate, or grounding component, and the "ground/ground plane" may be configured to ground a component in an electronic device, and may be, for example, a grounding layer of the first printed circuit board 140 or the second printed circuit board 240, a grounding metal layer formed by a metal thin film on a backlight side of the flexible display, a conductive grounding layer of the battery, and a conductive member or a metal part that is electrically connected to the grounding layer/grounding plate/metal layer.

In some embodiments of this application, as shown in FIG. 8a, the flexible circuit board 50 may further include a first adhesive layer 561 and a second adhesive layer 562. Both the first adhesive layer 561 and the second adhesive layer 562 are located in the first region 501, and the first adhesive layer 561 is located between the first protection layer 513 and the second coverage layer 521. The first protection layer 513 and the second coverage layer 521 are connected to each other through the first adhesive layer 561, so that relative motion between the first protection layer 513 and the second coverage layer 521 that are located in the first region 501 can be avoided. The second adhesive layer 562 is located between the second protection layer 523 and the third coverage layer 531. Similarly, the second protection layer 523 and the third coverage layer 531 are connected to each other through the second adhesive layer 562, so that relative motion between the second protection layer 523 and the third coverage layer 531 that are located in the first region 501 can be avoided.

In some embodiments of this application, the flexible circuit board 50 may further have a second region 503, and the first region 501, the bending region 502, and the second region 503 are sequentially connected to each other.

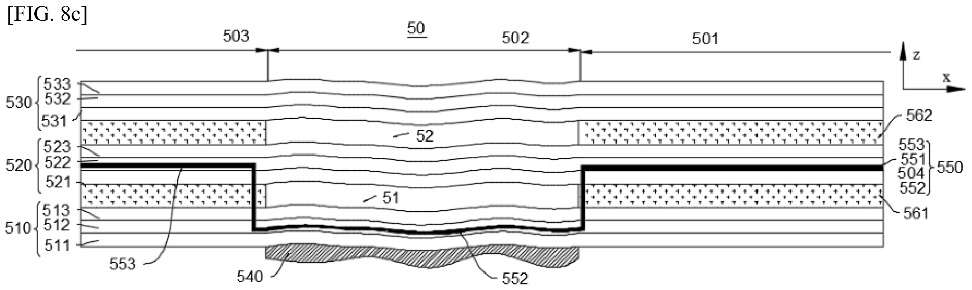

FIG. 8c is another sectional view of the flexible circuit board 50 according to an embodiment of this application. Refer to FIG. 8c. The fourth signal cable 550 may further include a third conductive section 553, and the third conductive section 553 is located in the second region 503 and is electrically connected to the second conductive section 552. The third conductive section 553 is formed on the second conductive layer 522. In other words, the third conductive section 553 is formed on the second conductive layer 522 in the second region 503.

Similar to the first conductive section 551, in a process of folding the foldable device, in the z direction, a distance between the third conductive section 553 and the first conductive layer 512 does not change or changes slightly, and a distance between the third conductive section 553 and the third conductive layer 532 does not change or changes slightly. A signal loss in the third conductive section 553 formed in the second region 503 is small.

For descriptions of the third conductive section 553 and the second region 503, refer to the descriptions of the first conductive section 551 and the first region 501. Details are not described herein again.

In addition, shortening a distance of the fourth signal cable 550 can also reduce a loss of a high-speed radio frequency signal transmitted through the fourth signal cable 550. For example, an extension direction of the fourth signal cable 550 is a straight line, so that the distance of the fourth signal cable 550 can be shortened. For example, a vertical projection of the fourth signal cable 550 on the second conductive layer 522 is a straight line. The straight line is perpendicular to the y direction. In addition, the distance of the fourth signal cable 550 can be shortened by adjusting placement positions of the system on chip 201 and the radio frequency integrated circuit 101. For example, a distance between the system on chip 201 and the radio frequency integrated circuit 101 is short in the y direction, and a distance between the system on chip 201 and the radio frequency integrated circuit 101 and the bending region 502 is short, so that the distance of the fourth signal cable 550 can be shortened, to reduce the loss of the high-speed radio frequency signal transmitted through the fourth signal cable 550.

A signal transmitted between the system on chip 201 and the radio frequency integrated circuit 101 is not limited to the foregoing high-speed radio frequency signal. In some embodiments, the signal transmitted between the system on chip 201 and the radio frequency integrated circuit 101 further includes a clock (clock) signal. The system on chip 201 and the radio frequency integrated circuit 101 transmit the clock signal through a clock signal cable. Because a precision requirement of the clock signal is high, an isolation requirement of the clock signal cable is correspondingly improved.

In FIG. 8b, the flexible circuit board 50 further includes a clock signal cable 554, and the clock signal cable 554 is electrically isolated from the fourth signal cable 550. The clock signal cable 554 is formed on the second conductive layer 522. The vertical projection of the fourth signal cable 550 on the second conductive layer 522 does not overlap the clock signal cable 554. Therefore, the fourth signal cable 550 and the clock signal cable 554 do not overlap in the thickness direction (namely, the z direction) of the flexible circuit board 50, so that interference between the fourth signal cable 550 and the clock signal cable 554 can be effectively reduced, isolation of the clock signal cable 554 is increased, and a clock signal transmitted through the clock signal cable 554 is more accurate.

That the clock signal cable 554 is electrically isolated from the fourth signal cable 550 means that the clock signal cable 554 is not electrically connected to the fourth signal cable 550 directly, and is not electrically connected to the fourth signal cable 550 through another conductor (for example, a conductor). The same applies to other descriptions about electrical isolation in this specification.

For example, the signal transmitted through the clock signal cable 554 may be a radio frequency integrated circuit clock signal (radio frequency clock).

In some embodiments, a distance between the fourth signal cable 550 and the clock signal cable 554 is greater than or equal to 0.4 mm. In this way, the distance between the fourth signal cable 550 and the clock signal cable 554 is long, and interference between the fourth signal cable 550 and the clock signal cable 554 is small. This helps improve isolation of the clock signal cable 554. For example, the distance between the fourth signal cable 550 and the clock signal cable 554 may be, for example, 0.4 mm, 0.5 mm, 0.6 mm, 0.7 mm, 0.8 mm, 0.9 mm, 1 mm, 1.2 mm, 1.5 mm, 1.8 mm, 2.5 mm, 3 mm, 3.5 mm, or 4 mm. For example, the clock signal cable 554 is located at an edge of the flexible circuit board 50. Compared with other cables on the flexible circuit board 50, a distance between the clock signal cable 554 and the edge of the flexible circuit board 50 is the smallest.

In this embodiment of this application, the flexible circuit board 50 is not limited to being equipped with the fourth signal cable 550 and the clock signal cable 554. For example, the second signal cable 02 may also be disposed on the flexible circuit board 50. For example, the second signal cable 02 is formed on the second conductive layer 522. The second signal cable 02, the fourth signal cable 550, and the clock signal cable 554 are electrically isolated from each other. For example, the fourth signal cable 550 is located between the clock signal cable 554 and the second signal cable 02. Compared with the fourth signal cable 550, the second signal cable 02 is farther away from the clock signal cable 554, and the second signal cable 02 causes less interference to a signal in the clock signal cable 554.

In some embodiments, an isolating conductive structure 555 is further disposed between the clock signal cable 554 and the second signal cable 02. The isolating conductive structure 555 is formed on the second conductive layer 522, the isolating conductive structure 555 is located on one side of the clock signal cable 554, and the isolating conductive structure 555 is located between the fourth signal cable 550 and the second signal cable 02. The isolating conductive structure 555 is electrically connected to the ground plane. An electrical isolation function of the isolating conductive structure 555 can improve isolation between the fourth signal cable 550 and the second signal cable 02, and avoid mutual interference between signals of the fourth signal cable 550 and the second signal cable 02. For example, the isolating conductive structure 555 may be a conductive plate or a conductive cable, and the conductive plate or the conductive cable is electrically connected to the ground plane.

In this embodiment of this application, in addition to the fourth signal cable 550, the second signal cable 02, and the clock signal cable 554, another signal cable, for example, a fifth signal cable 556 may be further disposed on the flexible circuit board 50. The fifth signal cable 556 is formed on the second conductive layer 522. The fifth signal cable 556 may be a signal cable of the flexible display 40, and the fifth signal cable 556 may be a signal cable or the like through which the second power management chip 202 is electrically connected to the radio frequency integrated circuit 101, the first voltage step-down component 601, the second voltage step-down component 602, and the third voltage step-down component 604.

It may be understood that, in this embodiment of this application, a manner of disposing other signal cables on the flexible circuit board 50 may also be the manner of disposing the fourth signal cable 550. For example, if another signal cable has a requirement for reducing a loss, a part of conductive sections may be formed on the second conductive layer 522 of the first region 501, and a part of the conductive sections may be formed on the first conductive layer 512 of the bending region 502. In other words, that only the fourth signal cable 550 for transmitting a high-speed radio frequency signal may be partially formed on the second conductive layer 522 in the first region 501, and be partially formed on the first conductive layer 512 in the bending region 502 is not limited in embodiments of this application. A manner of setting other signal cables may also be the same as that of setting the fourth signal cable 550.

As described above, the radio frequency integrated circuit 101 is disposed on the first printed circuit board 140, and the radio frequency integrated circuit 101 is electrically connected to the fourth signal cable 550 formed on the flexible circuit board 50. In some embodiments, the flexible circuit board 50 and the first printed circuit board 140 are electrically connected to each other via a first electrical connector 70a (as shown in FIG. 3) and a second electrical connector 70b. For example, both the first electrical connector 70a and the second electrical connector 70b include board-to-board connectors (Board-to-board Connectors, BTB).

For example, the first electrical connector 70a is configured to transmit a radio frequency signal. For example, the fourth signal cable 550 and the clock signal cable 554 described above are electrically connected to the first electrical connector 70a. The second electrical connector 70b is configured to transmit a non-radio frequency signal. For example, the second signal cable 02 and the fifth signal cable 556 described above are electrically connected to the second electrical connector 70b.

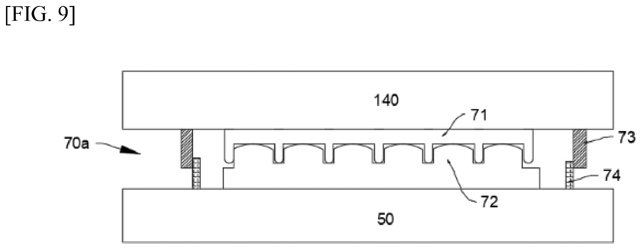

FIG. 9 is a diagram of a structure of the first electrical connector 70a according to an embodiment of this application. Refer to FIG. 9. The first electrical connector 70a may include a male connector 71 and a female connector 72, and the male connector 71 and the female connector 72 can be snap-fitted to each other. In some embodiments, the male connector 71 is disposed on the flexible circuit board 50, and the female connector 72 is disposed on the first printed circuit board 140. In some other embodiments, the male connector 71 is disposed on the first printed circuit board 140, and the female connector 72 is disposed on the flexible circuit board 50. When the male connector 71 and the female connector 72 are snap-fitted together, a circuit connection between the first printed circuit board 140 and the flexible circuit board 50 can be implemented.

A manner of connecting the male connector 71 or the female connector 72 to the flexible circuit board 50 is not limited in embodiments of this application, for example, may be welding. Similarly, a manner of connecting the male connector 71 or the female connector 72 to the first printed circuit board 140 is not limited, for example, may be welding.

In some embodiments, the first electrical connector 70a may further include a first shielding can 73 and a second shielding can 74. The first shielding can 73 is connected to the male connector 71 and disposed on a periphery of the male connector 71. The second shielding can 74 is connected to the female connector 72 and disposed on a periphery of the female connector 72. When the male connector 71 and the female connector 72 are snap-fitted together, the first shielding can 73 and the second shielding can 74 are also snap-fitted together. For example, the first shielding can 73 extends into the second shielding can 74, or the second shielding can 74 extends into the first shielding can 73. The first shielding can 73 and the second shielding can 74 are snap-fitted to improve isolation of the first electrical connector 70a. At an operating frequency of 0 GHz to 8 GHz, external isolation of the first electrical connector 70a may be less than or equal to -50 dB (dB).

Structures of the first shielding can 73 and the second shielding can 74 are not limited in embodiments of this application. For example, both the first shielding can 73 and the second shielding can 74 may be annular structures. Similarly, the first electrical connector 70a shown in FIG. 9 may also be used as a structure of an electrical connector that connects the second printed circuit board 240 to the flexible circuit board 50.

It may be understood that, in some embodiments of this application, the first shielding can 73 and the second shielding can 74 on the first electrical connector 70a are not necessary, and the first shielding can 73 and the second shielding can 74 may not be disposed.

For a structure of the second electrical connector 70a, refer to the foregoing description of the first electrical connector 70a. In some embodiments, the second electrical connector 70a is configured to transmit a non-radio frequency signal. If the non-radio frequency signal does not have a high isolation requirement, the second electrical connector 70a may not be equipped with the first shielding can 73 and the second shielding can 74.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A foldable device, wherein the foldable device comprises:
a first body, a rotating shaft, and a second body, wherein when the foldable device is in a flattened state, the first body, the rotating shaft, and the second body are sequentially arranged;
a radio frequency integrated circuit, configured to generate a radio frequency signal after performing radio frequency processing on data sent by a system on chip, and disposed on the first body;
the system on chip, configured to perform data receiving and data sending with the radio frequency integrated circuit, and disposed on the second body;
a flexible circuit board, wherein the radio frequency integrated circuit and the system on chip are electrically connected to each other via the flexible circuit board;
a first battery, disposed on the first body;
a second battery, disposed on the second body;
a first power management chip, disposed on the first body, electrically connected to the first battery, and configured to supply power to the radio frequency integrated circuit; and
a second power management chip, disposed on the second body, electrically connected to the second battery, and configured to: supply power to the system on chip and skip supplying power to the first power management chip.

2. The foldable device according to claim 1, wherein the second power management chip does not supply power to the radio frequency integrated circuit.

3. The foldable device according to claim 1 or 2, wherein the first battery is configured to output a power supply voltage, and the first battery is configured to provide the power supply voltage for the first power management chip; and the foldable device further comprises:
a voltage regulator circuit, disposed on the first body, electrically connected to the first battery, and configured to: reduce the power supply voltage and provide a reduced voltage for the first power management chip and the radio frequency integrated circuit.

4. The foldable device according to claim 3, wherein the voltage regulator circuit comprises:
a first voltage step-down component, disposed on the first body, electrically connected to the first battery, and configured to: reduce the power supply voltage to a first voltage and provide the first voltage for the first power management chip;
a second voltage step-down component, disposed on the first body, electrically connected to the first battery, and configured to: reduce the power supply voltage to a second voltage and provide the second voltage for the first power management chip; and
a first voltage regulation component, disposed on the first body, electrically connected to the first voltage step-down component, and configured to: reduce the first voltage to a third voltage and provide the third voltage for the first power management chip and the radio frequency integrated circuit.

5. The foldable device according to claim 4, wherein the foldable device further comprises a radio frequency switch disposed on the first body;
the voltage regulator circuit further comprises a third voltage step-down component and a second voltage regulation component, wherein the third voltage step-down component is disposed on the first body, is electrically connected to the first battery, and is configured to: reduce the power supply voltage to a fourth voltage and provide the fourth voltage for the second voltage regulation component; and
the second voltage regulation component is disposed on the first body, is electrically connected to the third voltage step-down component, and is configured to: reduce the fourth voltage to a fifth voltage and provide the fifth voltage for the radio frequency switch.

6. The foldable device according to claim 5, wherein the foldable device further comprises a radio frequency power amplifier disposed on the first body; both the third voltage step-down component and the first battery are electrically connected to the radio frequency power amplifier, and the third voltage step-down component is further configured to provide the fourth voltage for the radio frequency power amplifier; and the first battery is further configured to provide the power supply voltage for the radio frequency power amplifier.

7. The foldable device according to any one of claims 1 to 6, wherein the foldable device further comprises:
a charging manager, disposed on the second body, wherein both the first battery and the second battery are electrically connected to the charging manager; and
the charging manager is configured to: obtain a voltage of the first battery and a voltage of the second battery; and
output a control instruction based on a difference between the voltage of the first battery and the voltage of the second battery, wherein
the control instruction is used to: when the difference is greater than or equal to a threshold and the voltage of the first battery is higher than the voltage of the second battery, control the first battery to charge the second battery; or
the control instruction is used to: when the difference is greater than or equal to a threshold and the voltage of the first battery is lower than the voltage of the second battery, control the second battery to charge the first battery.

8. The foldable device according to any one of claims 1 to 7, wherein the foldable device further comprises:
a hardware module, disposed on the first body;
a first aggregation chip, disposed on the first body;
a first signal cable, wherein the hardware module is electrically connected to the first aggregation chip through the first signal cable; and
a second signal cable, wherein the system on chip is electrically connected to the first aggregation chip through the second signal cable; and
a quantity of first signal cables is greater than a quantity of second signal cables.

9. The foldable device according to claim 8, wherein the foldable device further comprises a second aggregation chip and a third signal cable, wherein the second aggregation chip is disposed on the second body, the second aggregation chip is electrically connected to the first aggregation chip through the second signal cable, and the second aggregation chip is electrically connected to the system on chip through the third signal cable; and
a quantity of third signal cables is equal to the quantity of first signal cables.

10. The foldable device according to any one of claims 1 to 9, wherein the flexible circuit board has a first region and a bending region, wherein when the foldable device is in the flattened state, a vertical projection of the rotating shaft on the flexible circuit board overlaps the bending region;
the flexible circuit board comprises: a shield layer, a first layer structure, a second layer structure, and a third layer structure that are sequentially stacked in a thickness direction of the flexible circuit board, wherein in the bending region, a first gap exists between the first layer structure and the second layer structure, and a second gap exists between the second layer structure and the third layer structure; and
the flexible circuit board further comprises: a fourth signal cable, configured to connect the radio frequency integrated circuit to the system on chip, wherein the fourth signal cable comprises a first conductive section and a second conductive section that are electrically connected to each other, the first conductive section is located in the first region and is formed in the second layer structure, the second conductive section is located in the bending region and is formed in the first layer structure, and a vertical projection of the shield layer on the first layer structure overlaps the second conductive section.

11. The foldable device according to claim 10, wherein the fourth signal cable further comprises a conductive via, wherein the conductive via penetrates the first layer structure and the second layer structure in the thickness direction of the flexible circuit board, and the first conductive section and the second conductive section are electrically connected to each other through the conductive via.

12. The foldable device according to claim 10 or 11, wherein the flexible circuit board further comprises a first adhesive layer and a second adhesive layer, wherein the first adhesive layer and the second adhesive layer are located in the first region, the first adhesive layer is located between the first layer structure and the second layer structure, and the second adhesive layer is located between the second layer structure and the third layer structure.

13. The foldable device according to any one of claims 10 to 12, wherein the vertical projection of the shield layer on the first layer structure covers the second conductive section.

14. The foldable device according to any one of claims 10 to 13, wherein the flexible circuit board further has a second region, and the first region, the bending region, and the second region are sequentially connected to each other; and
the fourth signal cable further comprises a third conductive section, the third conductive section is located in the second region and is electrically connected to the second conductive section, and the third conductive section is formed in the second layer structure.

15. The foldable device according to claim 14, wherein the flexible circuit board further comprises a clock signal cable formed in the second layer structure, the clock signal cable and the fourth signal cable are electrically isolated from each other, and a vertical projection of the fourth signal cable on the second layer structure does not overlap the clock signal cable.

16. The foldable device according to claim 15, wherein a distance between the clock signal cable and the fourth signal cable is greater than or equal to 0.4 mm.

17. The foldable device according to any one of claims 1 to 16, wherein the foldable device further comprises a cellular antenna and a short-range antenna, wherein the cellular antenna is disposed on the first body and is electrically connected to the radio frequency integrated circuit, and the short-range antenna is disposed on the second body and is electrically connected to the system on chip.

18. A flexible circuit board, wherein the flexible circuit board has a first region and a bending region; and the flexible circuit board comprises:
a first layer structure;
a second layer structure, stacked with the first layer structure, wherein in the bending region, a first gap exists between the first layer structure and the second layer structure;
a third layer structure, wherein the second layer structure is located between the third layer structure and the first layer structure; and in the bending region, a second gap exists between the second layer structure and the third layer structure;
a signal cable, wherein the signal cable comprises a first conductive section and a second conductive section that are electrically connected to each other, the first conductive section is located in the first region and is formed in the second layer structure, and the second conductive section is located in the bending region and is formed in the first layer structure; and
a shield layer, wherein the first layer structure is located between the second layer structure and the shield layer, and a vertical projection of the shield layer on the first layer structure overlaps the second conductive section.
